# EUROPEAN PATENT APPLICATION

(11) **EP 4 657 229 A1**
(43) Date of publication of application: **03.12.2025**
(21) Application number: 24829986.9
(22) Date of filing: 20.03.2024
(51) Int. Cl.: G06F 3/0486

(54) **DATA SHARING METHOD AND RELATED DEVICE**

(30) Priority: 29.06.2023 CN 202310788791
(71) Applicant: Honor Device Co., Ltd., Shenzhen, Guangdong 518040 (CN)
(72) Inventor: ZHOU, Shuang, Shenzhen, Guangdong 518040 (CN); YANG, Yuanyuan, Shenzhen, Guangdong 518040 (CN)
(74) Representative: Gill Jennings & Every LLP
(86) International application number: PCT/CN2024/082617
(87) International publication number: WO 2025/001333

(57) **Abstract**

This application discloses a data sharing method and a related device. After obtaining to-be-transmitted data, an electronic device generates a corresponding floating element. After detecting that a user drags the floating element to a preset hot zone, the electronic device may display icons of one or more applications that may be used to receive the to-be-transmitted data. Then, the electronic device may detect an operation of continuing to drag the floating element to a region in which any application icon is located and releasing the floating element, and then send the to-be-transmitted data to a corresponding application program. This method provides the user with a convenient, simple, fast, smooth, and intuitive data sharing solution, so that the user can share data when needed.

## Description

This application claims priority to Chinese Patent Application No. 202310788791.8, filed with the China National Intellectual Property Administration on June 29, 2023 and entitled "DATA SHARING METHOD AND RELATED DEVICE", which is incorporated herein by reference in its entirety.

### TECHNICAL FIELD

This application relates to the field of terminal technologies, and in particular to a data sharing method and a related device.

### BACKGROUND

When a user uses an electronic device such as a mobile phone, there is a need to share data such as a text, a picture, a file, and a video. For example, the user wants to share a photo in a gallery with a contact in social software, or share a text in a browser with translation software for translation. Providing convenient, simple, and intuitive data sharing solutions for the user is the current and future research direction.

### SUMMARY

This application provides a data sharing method and a related device, so that a user can share data when needed.

According to a first aspect, a data sharing method is provided, where the method may include: displaying a first interface, where the first interface includes a first element; detecting a drag operation on the first element;
when the drag operation is a first drag operation, a touch start point of the first drag operation is on the first element and is located in a first region of a display screen, and a touch end point is located in a second region of the display screen, displaying a first menu bar, where the first menu bar includes an icon of a first application and an icon of a second application, and the first region and the second region do not overlap; after an operation of continuing to drag the first element to a region in which the icon of the first application is located and releasing the first element is detected, sharing first data corresponding to the first element with the first application;
when the drag operation is a second drag operation, a touch start point of the second drag operation is on the first element and is located in the second region, a touch end point is located in the second region of the display screen, and a track of the second drag operation is located in the second region, not displaying the first menu bar; and
when the drag operation is a third drag operation, a touch start point of the third drag operation is on the first element and is located in the second region, a touch end point is located in the second region, and a track of the third drag operation passes through the first region, displaying the first menu bar.

According to the method of the first aspect, an electronic device displays the first menu bar after detecting an operation of dragging the first element from the first region to the second region, or detecting an operation of dragging the first element from the second region to the first region and then dragging the first element to the second region, and does not display the first menu bar after detecting an operation of dragging the first element in the second region. In this way, a user can be provided with a convenient, simple, fast, smooth, and intuitive data sharing solution, so that the user can share data when needed. This can avoid displaying the first menu bar when a touch point is located in the second region for the first time, thereby implementing a false touch prevention effect.

With reference to the first aspect, in some implementations, the first menu bar is displayed in response to the first drag operation when the drag operation is the first drag operation; the first menu bar is not displayed in response to the second drag operation when the drag operation is the second drag operation; and the first menu bar is displayed in response to the third drag operation when the drag operation is the third drag operation.

With reference to the first aspect, in some implementations, when the drag operation is the first drag operation, the first menu bar is displayed after the touch end point of the first drag operation stays in the second region for first duration; when the drag operation is the second drag operation, the first menu bar is not displayed after the touch end point of the second drag operation stays in the second region for the first duration; and when the drag operation is the third drag operation, the first menu bar is displayed after the touch end point of the third drag operation stays in the second region for the first duration. That the touch end point stays in the second region for the first duration may be considered that the user needs to share data. Therefore, the electronic device displays the first menu bar again, so as to provide a data sharing service for the user more accurately, and avoid triggering the first menu bar by mistake.

With reference to the first aspect, in some implementations, the first drag operation and the operation of continuing to drag the first element to the region in which the icon of the first application is located and releasing the first element are continuous and uninterrupted.

With reference to the first aspect, in some implementations, before the displaying a first interface, the method may further include: displaying a second interface, where the second interface includes a text; and detecting an operation of selecting a first text in the text, and displaying a toolbar on the first text, where the toolbar includes a plurality of controls used to process the first text; and the displaying a first interface includes: detecting a long press operation acting on the first text, stopping displaying the toolbar, and displaying the first interface; where the first element includes a preview image of the first text, and the first data includes the first text. This is equivalent to that the electronic device can conveniently share a text selected by the user.

With reference to the first aspect, in some implementations, before the displaying a first interface, the method may further include: detecting a screenshot operation when a second interface is displayed; and the displaying a first interface includes: displaying the first interface in response to the screenshot operation, where the first element includes a preview image of a screenshot image of the second interface, and the first data includes the screenshot image. This is equivalent to that the electronic device can conveniently share a screenshot.

With reference to the first aspect, in some implementations, before the displaying a first interface, the method may further include: displaying a second interface, where the second interface includes an icon of a first image and an icon of a second image; and detecting an operation of selecting the icon of the first image; and the displaying a first interface includes: detecting a long press operation acting on the icon of the first image, and displaying the first interface; where the first element includes a preview image of the icon of the first image, and the first data includes the first image. It is equivalent to that, the electronic device can conveniently share an image, and the image may include a type such as a picture, an animated picture, or a video.

With reference to the first aspect, in some implementations, the first menu bar and the second region in which the touch end point of the first drag operation or the third drag operation is located are on a same side of the display screen. That is, when the user drags the first element toward a direction, the electronic device displays the first menu bar toward the direction, which can provide better use experience for the user.

With reference to the first aspect, in some implementations, when the drag operation is the first drag operation, or when the drag operation is the third drag operation, further adjusting the first interface to a perspective style of a first side when the first menu bar is displayed, where the first side is a side, on which the first menu bar is located, of the display screen. In this way, the first interface of the perspective style on the first side and the first menu bar may vividly form an "open door" effect.

With reference to the first aspect, in some implementations, the first interface further includes a video in playback, and the method may further include: when the drag operation is the first drag operation, or when the drag operation is the third drag operation, displaying, when the first menu bar is displayed, a screenshot image of the first interface, and displaying the screenshot image of the first interface to a perspective style of a first side, where the first side is a side, on which the first menu bar is located, of the display screen.

With reference to the first aspect, in some implementations, the second region includes: a rectangular region on a left side edge of the display screen and a rectangular region on a right side edge of the display screen, where a height of the rectangular region is the same as a height of the display screen.

With reference to the first aspect, in some implementations, when the drag operation is the first drag operation, a track of the first drag operation passes through the third region, and the third region includes the second region; and the method may further include: displaying a glow strip in response to an operation of dragging the first element to the third region in the first drag operation, where the glow strip and the first menu bar are located on a same side of the display screen; and the displaying a first menu bar includes: stopping displaying the glow strip and displaying the first menu bar in response to an operation of dragging the first element to the third region and then dragging the first element to the second region in the first drag operation. The electronic device displays the glow strip, and may prompt the user to continue to drag toward a same direction to trigger display of the first menu bar, so as to share data.

In some implementations, the third region includes: the rectangular region on the left side edge of the display screen and the rectangular region on the right side edge of the display screen, where a height of the third region is the same as the height of the display screen.

With reference to the first aspect, in some implementations, the first menu bar further includes an icon of a third application and an icon of a fourth application, and the icon of the first application, the icon of the second application, the icon of the third application, and the icon of the fourth application are arranged in sequence from top to bottom; and after the displaying a first menu bar, the method may further include: detecting a fourth drag operation of continuing to drag the first element in a fourth region, where the fourth region includes the second region in which the touch end point of the first drag operation or the third drag operation is located, a touch start point of the fourth drag operation is the same as the touch end point of the first drag operation or the third drag operation, and a touch end point of the fourth drag operation is closest to the icon of the second application in the first menu bar; and in response to the fourth drag operation, displaying the icon of the fourth application as a base size, displaying the icon of the second application as a size after the base size is magnified by a first proportion, and displaying the icon of the first application and the icon of the third application as a size after the base size is magnified by a second proportion, where the first proportion is greater than the second proportion.

In the foregoing implementation, the closer the touch point between the user and the display screen is to an icon of an application in the first menu bar, the larger the icon of the corresponding application may be. In this way, an effect that an icon of an application in the first menu bar is adsorbed by a finger of the user can be presented, and a size of the application icon can be increased so that the user pays attention to the icon of the corresponding application.

With reference to the foregoing implementation, the fourth region includes a rectangular region including the second region in which the touch end point of the first drag operation or the third drag operation is located, and a height of the fourth region is the same as the height of the display screen.

With reference to the first aspect, in some implementations, after the detecting a fourth drag operation of continuing to drag the first element to a fourth region, the method may further include: detecting a fifth drag operation of continuing to drag the first element to a fifth region, where the fifth region and the fourth region do not overlap; and displaying each icon in the first menu bar as the base size in response to the fifth drag operation.

With reference to the first aspect, in some implementations, when the drag operation is the first drag operation, or when the drag operation is the third drag operation, after the displaying a first menu bar, the method may further include: detecting a sixth drag operation of continuing to drag the first element to a sixth region, where the sixth region and the second region do not overlap, and the sixth region is located on an opposite side of the first menu bar on the display screen; and stopping displaying the first menu bar in response to the sixth drag operation.

In the foregoing implementation, the electronic device provides the sixth region used to stop displaying the first menu bar. After the user triggers the electronic device by mistake to display the first menu bar, the user can simply and conveniently stop the misoperation.

In some implementations, a touch start point of the sixth drag operation is the same as the touch end point of the first drag operation or the third drag operation, that is, the sixth drag operation and the first drag operation or the third drag operation are continuous and uninterrupted. In this way, the finger of the user does not need to leave the display screen of the electronic device, and keeps continuously touching the display screen, thereby conveniently and quickly avoiding a misoperation.

In some implementations, the sixth region and the fifth region do not overlap.

With reference to the first aspect, in some implementations, the method may further include: displaying a third interface, where the third interface includes a second element; detecting a drag operation on the second element; when the drag operation is a seventh drag operation, a touch start point of the seventh drag operation is on the second element and is located in a seventh region of the display screen, and a touch end point is located in an eighth region of the display screen, displaying a second menu bar, where the seventh region and the eighth region do not overlap; when the drag operation is an eighth drag operation, a touch start point of the eighth drag operation is on the second element and is located in the eighth region, a touch end point is located in the eighth region of the display screen, and a track of the eighth drag operation passes through the seventh region, displaying the second menu bar; and when the drag operation is not the seventh drag operation or the eighth drag operation, not displaying the second menu bar; where the eighth region is a part of the second region.

In the foregoing implementation, it is equivalent to reducing the region used to trigger display of the menu bar from the second region to the eighth region. By reducing the region, a probability that the user triggers the menu bar by mistake can be avoided.

In some implementations, the eighth region includes the rectangular region on the left side edge of the display screen and the rectangular region on the right side edge of the display screen; and a height of the eighth region is the same as a height of the second region, and a width of the eighth region is half of a width of the second region.

In some implementations, the third interface is provided by a fifth application, and the fifth application includes a word editing-type application.

In some implementations, an icon of an application included in the second menu bar and an icon of an application included in the first menu bar may be different. The icon included in the first menu bar may include an icon of an application that supports receiving the first data, and the icon included in the second menu bar may include an icon of an application that supports receiving second data corresponding to the second element.

With reference to the first aspect, in some implementations, the second region when the display screen is in a landscape state is different from the second region when the display screen is in a portrait state.

With reference to the first aspect, in some implementations, the first interface is provided by a sixth application, and the sixth application is different from the first application. This is equivalent to that the method can implement cross-application data transmission.

According to a second aspect, an electronic device is provided, including a memory and one or more processors, where the memory is coupled to the one or more processors, the memory is configured to store computer program code, the computer program code includes computer instructions, and the one or more processors invoke the computer instructions, so that the electronic device performs the method performed by the electronic device according to the first aspect or any implementation of the first aspect.

According to a third aspect, this application provides a computer-readable storage medium, including instructions, where when the instructions are run on an electronic device, the electronic device is enabled to perform the method performed by the electronic device according to the first aspect or any implementation of the first aspect.

According to a fourth aspect, a computer program product is provided. When the computer program product runs on a computer, the computer is enabled to perform the method performed by the electronic device according to the first aspect or any implementation of the first aspect.

According to a fifth aspect, a chip system is provided, where the chip system includes at least one processor, configured to implement the method performed by the electronic device according to the first aspect or any implementation of the first aspect.

### BRIEF DESCRIPTION OF DRAWINGS

FIG. 1A to FIG. 1N are a group of user interfaces for implementing data sharing on an electronic device according to an embodiment of this application;
FIG. 2 is a schematic diagram of various hot zones of a mobile phone in a portrait state according to an embodiment of this application;
FIG. 3 is a schematic diagram of a hot zone of a mobile phone in a landscape state according to an embodiment of this application;
FIG. 4A to FIG. 4F are a group of user interfaces for sharing screenshots according to an embodiment of this application;
FIG. 4G is a user interface for preventing a false touch according to an embodiment of this application;
FIG. 4H to FIG. 4L are another user interface for preventing a false touch according to an embodiment of this application;
FIG. 4M to FIG. 4R are still another user interface for preventing a false touch according to an embodiment of this application;
FIG. 5A and FIG. 5B are a group of user interfaces for moving a floating window according to an embodiment of this application;
FIG. 5C to FIG. 5L are a user interface for preventing a false touch in a floating window scenario according to an embodiment of this application;
FIG. 6 is a block diagram of a hardware structure of an electronic device according to an embodiment of this application; and
FIG. 7 is a software architecture of an electronic device according to an embodiment of this application.

### DESCRIPTION OF EMBODIMENTS

The following clearly and completely describes the technical solutions in embodiments of this application with reference to the accompanying drawings. In descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually in a representation form of a graphical user interface (graphic user interface, GUI), and the graphical user interface is a user interface that is related to a computer operation and that is displayed in a graphical manner. The user interface may be a visual interface element such as a text, an icon, a button, a menu, a tab, a text box, a dialog box, a status bar, a navigation bar, or a Widget displayed on a display screen of the electronic device.

The following embodiments of this application provide a data sharing method and a related device.

The method may be applied to an electronic device. The electronic device is an intelligent terminal device, and may be of various types. A specific type is not limited in embodiments of this application. For example, the electronic device may be a mobile phone, or may include a tablet computer, a desktop computer, a laptop (laptop), a handheld computer, a notebook computer, a smart screen, a wearable device, an augmented reality (augmented reality, AR) device, a virtual reality (virtual reality, VR) device, an artificial intelligence (artificial intelligence, AI) device, an in-vehicle infotainment, a smart headset, a game console, or may be an internet of things (internet of things, IOT) device or a smart household device such as a smart TV.

In the method, after obtaining to-be-transmitted data, an electronic device generates a corresponding floating element. After detecting that a user drags the floating element to a preset hot zone, the electronic device may trigger a smart transfer service, that is, display icons of one or more applications that may be used to receive the to-be-transmitted data. Then, the electronic device may detect an operation of continuing to drag the floating element to a region in which any application icon is located and releasing the floating element, and then send the to-be-transmitted data to a corresponding application program.

This method provides the user with a convenient, simple, fast, smooth, and intuitive data sharing solution, so that the user can share data when needed, thereby improving terminal use experience of the user.

The drag operation mentioned in the method may be performed by a finger of the user, or may be performed by an information input device such as a stylus or a mouse.

Several concepts related to the data sharing method provided in this application are first described as follows:

### To-be-transmitted data

The to-be-transmitted data may be locally stored in an electronic device, for example, a storage path corresponding to some applications (such as a gallery) in the electronic device, or may be stored in a cloud device.

The to-be-transmitted data may include a plurality of types. The following lists several examples:
(1) Text. A text may be a text in a web page displayed by an electronic device, a text in a browser, a text in social software, a text identified in a picture (for example, a picture stored in a gallery of the electronic device or a screenshot image (also referred to as a screenshot)), a text obtained after voice conversion, or the like.
(2) Document. A document may include a text document, a table document, and a code document.
(3) Picture. A picture may include a static picture, or may include a dynamic picture. The picture may further include a full-screen screenshot, a partial screenshot (that is, an irregular-shaped screenshot), an edited screenshot, and the like.
4. Video. A video may include a video shot by an electronic device, a video downloaded from a network, a screen recording video, and the like.
(5) Hyperlink.

### Floating element

An electronic device may display to-be-transmitted data. After a user enters a user operation (such as a long press operation) on the to-be-transmitted data, the electronic device can generate a corresponding floating element.

A floating element is an element that is displayed on a display screen and floats above another interface element displayed on the display screen, and may be dragged by the user to any position on the display screen. The floating element may be implemented as a thumbnail or a preview image of corresponding to-be-transmitted data, or certainly may be implemented in another form, such as a name, a mark, or a part or all of content of the to-be-transmitted data. This is not limited in this application.

### Hot zone

A hot zone is a region that is on a display screen of an electronic device and that is used to trigger a specific function.

In a process of performing the data sharing method provided in this application, a plurality of hot zones that are used to trigger different functions may be involved. Details are subsequently described. A size (that is, a dimension), a position, a shape, and the like of each hot zone in this application may be set according to a user requirement and a use feeling.

Each hot zone provided in this application is a region processed by the electronic device itself, and may not be indicated to the user. That is, the electronic device does not need to indicate each hot zone of the display screen to the user.

In some implementations, when the electronic device uses a function corresponding to a hot zone for the first time, the electronic device may provide a usage instruction, so as to remind the user of a position of each hot zone and a specific function that can be triggered by the hot zone.

In some other implementations, the electronic device may alternatively remind the user of the hot zone. For example, each hot zone may be highlighted in a shadow, a color, or the like, so that the user learns of the hot zone.

### Smart transfer service

A smart transfer service is a system service or a system function provided by an electronic device in this application, and may support the electronic device to conveniently transmit data from one application to another application. Specifically, the smart transfer service supports the electronic device to display, on the display screen, icons of one or more applications that can be used to receive the to-be-transmitted data, and after detecting an operation of continuing to drag a floating element to a region in which any application icon is located and releasing the floating element, send the to-be-transmitted data to a corresponding application program.

The smart transfer service is merely a word used in this embodiment, and a meaning represented thereby is recorded in this embodiment, and a name thereof cannot constitute any limitation on this embodiment. In addition, in some other embodiments of this application, the smart transfer service may also be referred to as another term such as "magic portal".

The following describes a data sharing method by using an example UI provided in this application.

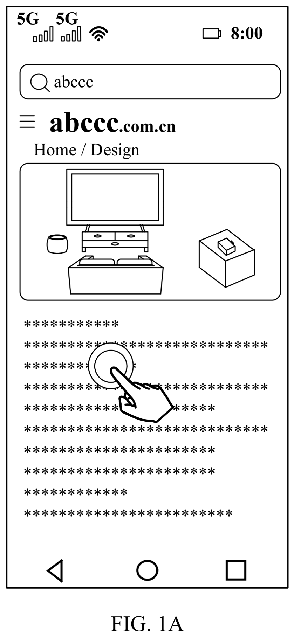

FIG. 1A to FIG. 1N are a group of user interfaces for implementing data sharing on an electronic device 100.

### Generating a floating element

FIG. 1A is one user interface according to an embodiment of this application.

An application program that provides the user interface may be a system application program, or may be a third-party application program. In this embodiment of this application, the system application program is an application program that is directly provided by an operating system of the electronic device 100 and that is used to implement a specific function. The third-party application program is an application program that is obtained by the electronic device 100 over the Internet, that is provided by another developer, and that is used to implement a specific function.

In some implementations, the user interface may alternatively be a main interface (homepage), a leftmost home screen, a lock screen interface, or the like of the electronic device 100. This is not limited in this application.

In a process of displaying the user interface shown in FIG. 1A, the electronic device 100 may detect a long press operation acting on the display screen. The operation is not limited to a long press operation, or may be a user operation such as a double-tap operation or a preset sliding operation of a specific track. This is not limited in this application. In response to the foregoing operation, the electronic device 100 may obtain a text in a region in which the long press operation is located in the user interface, and display the following content on this part of the text: a text selection box, drag bars at a start position and an end position of the text selection box, and a toolbar at a top of the text selection box. When initially detecting the long press operation, the electronic device 100 may display a text selection box on only a few texts (for example, 1-2 words in a region in which a touch point of the long press operation is located). The drag bar at the start position and the drag bar at the end position of the text selection box can be dragged by the user to adjust a size of the text selection box, that is, to adjust a selected text. The toolbar may include a plurality of controls used to process the selected text, such as a cut control, a copy control, a paste control, and a share control.

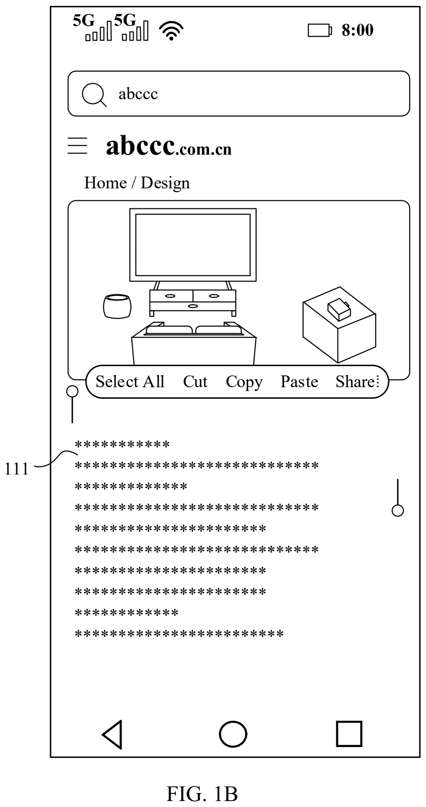

The electronic device 100 may then detect a user operation to adjust the selected text (such as dragging the drag bar at the start position or the end position of the text selection box to adjust the region or the size of the text selection box). The electronic device 100 may determine, according to the user operation of selecting the text, a target text that the user wants to select. Referring to FIG. 1B, for example, after the user adjusts the text selection box to a size shown in FIG. 1B, the electronic device 100 may determine a target text 111 according to the user operation.

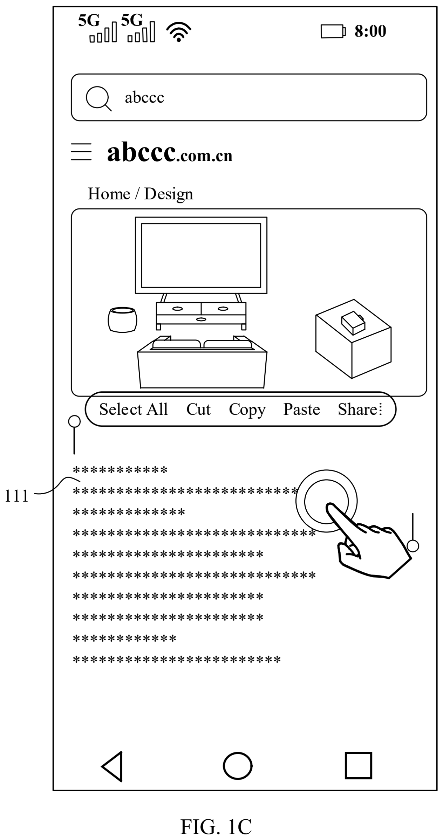

Referring to FIG. 1C-FIG. 1D, after determining the target text 111, the electronic device 100 may detect a long press operation acting on the target text 111. In response to the foregoing operation, the electronic device 100 may display a control 112 in a floating state corresponding to the target text 111. The control 112 may be located at a position of a touch point acting on the display screen when the user enters the long press operation.

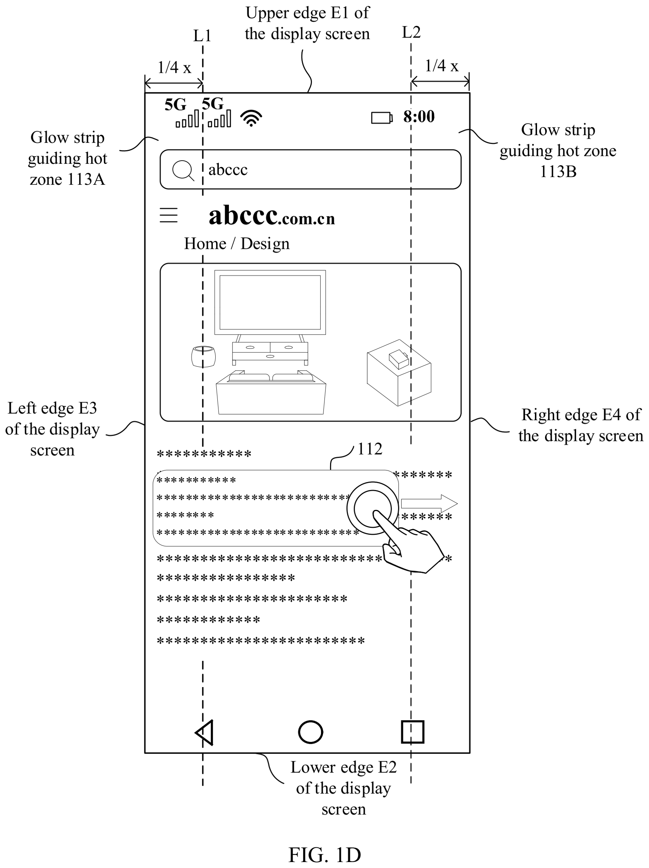

In some implementations, in response to a long press operation acting on the target text 111, the electronic device may use a touch point of the long press operation on the display screen as an anchor to generate the control 112 in a floating state. That the touch point is used as an anchor means that a position point of the control 112 (such as a position slightly above the center, a midpoint of an upper edge, a center point, or a midpoint of a right edge) is located at the anchor. In FIG. 1D, an example in which a position on an inner side of the right side of the control 112 is located at the anchor is used for description.

Optionally, the target text 111 may be displayed in the control 112. In some implementations, when the target text 111 has a relatively large amount of content, the control 112 may display some of the target text 111, such as the first sentence of the target text 111 or a digest of the target text 111. In some implementations, the control 112 may further be implemented as a preview image or a thumbnail of the target text 111.

The control 112 in a floating state generated in FIG. 1D is a floating element in this application.

The control 112 in a floating state may adjust a display position in real time following a drag operation of the user acting on the control 112.

In some implementations, when the user drags the control 112, if the touch point enters an edge position of the display screen, some content of the control 112 may exceed the screen without being displayed, or the electronic device may reduce the size of the control 112 to avoid incomplete display.

Referring to FIG. 1D, after the electronic device generates the control 112 in a floating state, the text selection box below continues to be displayed, so that the corresponding text remains in the selected state, but the drag bars at the start position and the end position of the text selection box, and the toolbar above the text selection box are no longer displayed. In some implementations, when generating the control 112 in a floating state, the electronic device may further output a vibration signal, so as to prompt the user that the current control 112 in a floating state can be dragged.

### Glow strip guiding hot zone

The display screen has a corresponding glow strip guiding hot zone. The glow strip guiding hot zone is used to trigger a glow strip effect in a guiding direction, where the direction is a drag direction for triggering a smart transfer service.

Referring to FIG. 1D, after the electronic device 100 generates the control 112 in a floating state, the electronic device 100 generates a glow strip guiding hot zone. As shown in FIG. 1D, the glow strip guiding hot zone may include a region 113A surrounded by a dashed line L1 on a left side of the display screen and an upper edge E1, a left edge E3, and a lower edge E2 of the display screen, and a region 113B surrounded by a dashed line L2 on a right side of the display screen and the upper edge E1, a right edge E4, and the lower edge E2 of the display screen. Heights of both the region 113A and the region 113B are the same as a height of the display screen, and widths thereof may be 25% of a width x of the display screen.

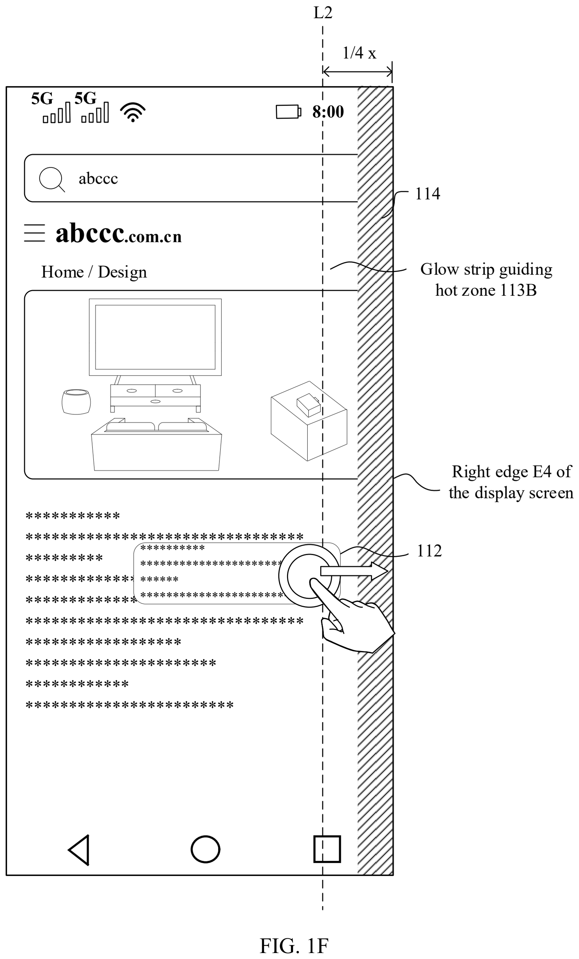

Referring to FIG. 1D-FIG. 1E, the electronic device 100 may detect a user operation of dragging, by the user, the control 112 to slide towards a right side edge of the display screen. After detecting that the touch point of the finger of the user on the display screen enters the glow strip guiding hot zone 113B on the right side of the display screen, the electronic device 100 may display a glow strip 114 shown in FIG. 1F on the right side of the display screen. Alternatively, after detecting that the touch point of the finger of the user on the display screen enters the glow strip guiding hot zone 113B on the right side of the display screen, and stays in the glow strip guiding hot zone 113B for specific duration (for example, 600 ms), the electronic device 100 may display the glow strip. The long press operation used to generate the control 112 in a floating state and the operation of dragging the control 112 to slide may be continuous and uninterrupted operations, or may be two operations with an interval.

The glow strip 114 may be a strip interface element with attributes such as color, shadow, gradient, graphic filling (for example, grid filling or slash filling). In some implementations, the glow strip 114 may further present an animation effect, such as changing a color and blinking display.

The glow strip 114 on the right edge of the display screen may be used to prompt the following information: 1. The current control 112 has been dragged to the right side of the display screen; 2. A drag direction that continues to the right is a drag direction that triggers the smart transfer service. That is, if the user continues to drag the control 112 to the right, the smart transfer service may be triggered.

Referring to the control 112 shown in FIG. 1D-FIG. 1E, in a process of dragging the control 112 to slide, the electronic device 100 may reduce a size of the control 112 to reduce occlusion on other content on the display screen.

In another implementation, if the electronic device 100 detects that the user drags the control 112 in FIG. 1D to the glow strip guiding hot zone 113A on the left side of the display screen, the electronic device 100 may display the glow strip on the left side edge of the display screen. The glow strip may be used to prompt the following information: 1. The current control 112 has been dragged to the left side of the display screen; 2. A drag direction that continues to the left is a drag direction that triggers the smart transfer service. That is, if the user continues to drag the control 112 to the left, the smart transfer service may be triggered.

This is equivalent to dragging the control 112 to the glow strip guiding hot zone on the left side or the right side of the display screen. Display of the glow strip can be triggered in both cases.

### Open-door hot zone

The display screen has a corresponding open-door hot zone. The open-door hot zone is used to trigger the smart transfer service.

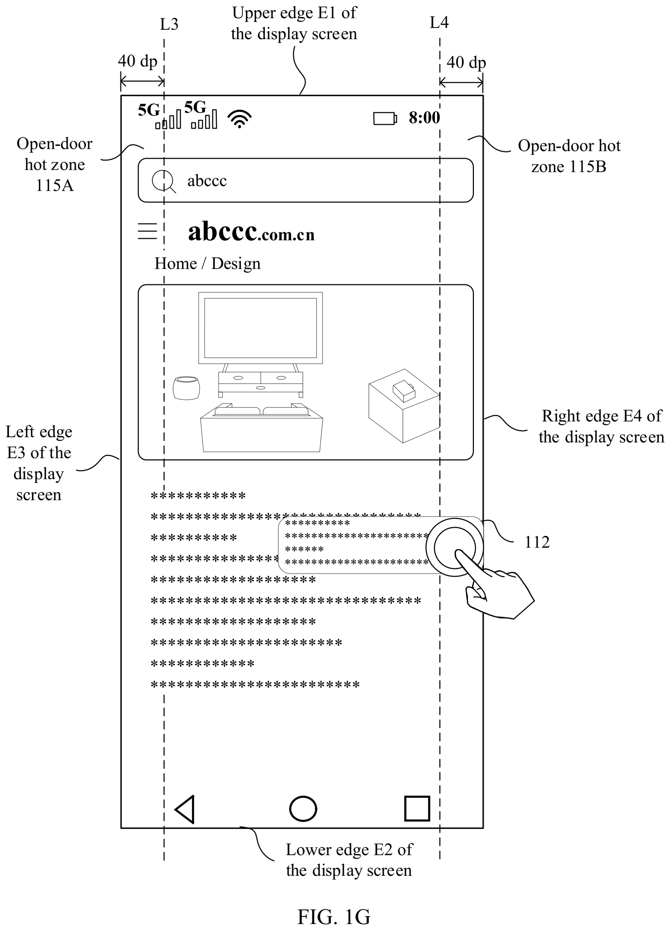

Referring to FIG. 1G, after the electronic device 100 generates the control 112 in a floating state, the electronic device 100 generates an open-door hot zone. As shown in FIG. 1G, the open-door hot zone may include a region 115A surrounded by a dashed line L3 on a left side of the display screen and an upper edge E1, a left edge E3, and a lower edge E2 of the display screen, and a region 115B surrounded by a dashed line L4 on a right side of the display screen and the upper edge E1, a right edge E4, and the lower edge E2 of the display screen. Heights of the region 115A and the region 115B are the same as a height of the display screen, and widths thereof may occupy 40 (density-independent pixel, dp) of a width of the display screen, where dp is an abstract unit based on screen density, and 1dp* pixel density/160 = actual pixel quantity. Therefore, the widths of the region 115A and the region 115B are related to pixel density of the display screen. Larger pixel density indicates a larger width thereof.

Referring to FIG. 1F-FIG. 1G, the electronic device 100 may detect a user operation of continuing to, by the user, drag the control 112 toward the right side of the display screen. After detecting that a touch point of the finger of the user on the display screen enters an open-door hot zone 115B on the right side of the display screen, the electronic device 100 may stop displaying a glow strip, and trigger the smart transfer service. Alternatively, after detecting that the touch point of the finger of the user on the display screen enters the open-door hot zone 115B on the right side of the display screen, and stays in the open-door hot zone 115B for specific duration (for example, 600 ms), the electronic device 100 may stop displaying the glow strip, and trigger the smart transfer service. The duration may be set as required, which is not limited herein.

The smart transfer service is a service that the electronic device 100 matches an application program capable of receiving to-be-transmitted data and provides a user with quick sending of the to-be-transmitted data to another target application program. Data corresponding to a floating element on which the user acts when the smart transfer service is triggered is to-be-transmitted data. For example, in a scenario in which the control 112 is slid rightward to the open-door hot zone 115B on the right side edge to trigger the smart transfer service shown in FIG. 1F-FIG. 1H, the target text 111 corresponding to the control 112 is to-be-transmitted data.

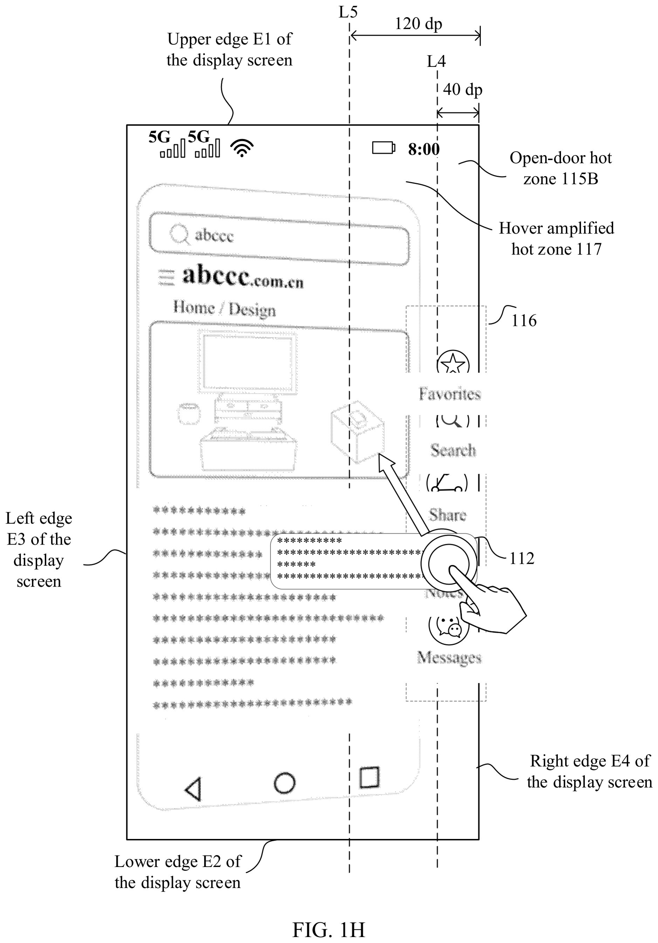

Referring to FIG. 1H, the electronic device 100 may display a menu bar 116 including icons of one or more candidate applications on the right side of the display screen after detecting that the touch point of the finger of the user on the display screen enters the open-door hot zone 115B on the right side of the display screen, or after detecting that the touch point of the finger of the user on the display screen enters the open-door hot zone 115B on the right side of the display screen and stays in the open-door hot zone 115B for specific duration (such as 600 ms). The duration may be referred to as first duration.

The menu bar 116 may include a favorites icon, a search icon, a share icon, a notes icon, a messages icon, and the like. A favorites application corresponding to the favorites icon may be a system application that provides a global system favorites function. A notes application corresponding to the notes icon may be a system application, or may be a third-party application, and may provide functions such as a record and favorites in the application. A candidate application is an application program that is selected by the electronic device 100 from all installed application programs and that supports receiving the to-be-transmitted data. The electronic device 100 may determine the candidate application based on an information type and semantic information of the to-be-transmitted data. The candidate application may include a global application (such as a favorites application, a search application, a share application, and an email application) that supports receiving any type of data, or may include an application that supports receiving only some types of data (such as a picture editing application that supports receiving only pictures, and a navigation application that supports receiving only a text). Different to-be-transmitted data may correspond to different menu bars.

In some implementations, when the electronic device 100 displays the menu bar 116, the control 112 may be further reduced to avoid blocking the menu bar 116. For example, the electronic device may reduce the control 112 so that the height of the control 112 is consistent with the height of the icon of the candidate application in the menu bar 116.

Referring to FIG. 1H, the electronic device 100 displays the menu bar 116 that includes an icon of a candidate application on the right side of the display screen. In addition, the electronic device 100 may adjust an original foreground user interface to a right perspective style, which vividly forms an "open door" animation effect with the menu bar 116. The foreground user interface may be an interface that includes other content that does not include a status bar and that is displayed on the display screen, or may be all content that includes the status bar and that is displayed on the display screen.

If the foreground user interface originally displayed by the electronic device 100 includes an animation effect, such as a video or an animated picture, the electronic device may capture a screenshot image of the user interface, and then adjust the screenshot image to a perspective style. That is, a perspective-style interface may be a screenshot obtained through processing by an operating system of the electronic device. In some other implementations, the electronic device may alternatively adjust the original user interface to a perspective style, and further continue to play an animation effect, such as continuing to play a video or an animated picture, in the perspective-style user interface.

In another implementation, if the electronic device 100 detects that the user drags the control 112 in FIG. 1D-FIG. 1F to an open-door hot zone 115A on the left side of the display screen, the electronic device 100 may display a menu bar including an icon of a candidate application on the left side of the display screen, and adjust the original foreground user interface to a left perspective style, to form an "open door" animation effect with the menu bar.

This is equivalent to dragging the control 112 to the left side edge of the display screen or the open-door hot zone on the right side. The "open door" animation effect can be triggered, and the smart transfer service can be triggered in both cases.

A width of the open-door hot zone may be narrower than a width of the glow strip guiding hot zone. In this way, in a process of dragging the control 112, the electronic device 100 first enters the glow strip guiding hot zone to trigger a guided glow strip effect, and then enters the open-door hot zone to trigger the smart transfer service.

### Hover amplified hot zone

The display screen has a corresponding hover amplified hot zone. The hover amplified hot zone is used to trigger a proximity hover animation effect.

Referring to FIG. 1H, after displaying the menu bar 116, the electronic device 100 generates a hover amplified hot zone. As shown in FIG. 1H, the hover amplified hot zone may include a region 117 surrounded by a dashed line L5 on the right side of the display screen and an upper edge E1, a right edge E4, and a lower edge E2 of the display screen. A height of the region 117 is the same as the height of the display screen, and a width thereof may be 120 dp of the width of the display screen.

The proximity hover animation effect means that, after the user drags the control 112 to the hover amplified hot zone at the touch point on the display screen, an icon of a candidate application closest to the touch point in the menu bar 116 is magnified based on a base size, and an icon of one adjacent application icon before and an icon of one adjacent application icon after the icon of the candidate application are correspondingly magnified, but a magnification degree is less than a magnification degree of the icon of the candidate application.

The base size may be set as required, which is not limited herein. The icon of the candidate application closest to the touch point may be magnified to a first proportion (for example, 150% or another proportion) of the base size, and a magnified state of the icon may be referred to as a hover state. Adjacent one application icon before and after the icon of the candidate application closest to the touch point may be magnified to a second proportion (for example, 120% or another proportion) of the base size, and a magnified state of the icon may be referred to as a proximity hover state. The first proportion is greater than the second proportion, and the first proportion and the second proportion may be preset.

Specifically, the electronic device first detects whether the touch point is located in a hover amplified region, and if yes, determines an icon of a candidate application closest to the touch point. For example, the electronic device 100 first determines a position of an icon of each candidate application that includes the base size on the display screen, and then draws a straight line along a horizontal parallel direction of the touch point toward the display screen, where an icon of a candidate application that overlaps the straight line is an icon of a closest candidate application. For another example, the electronic device 100 first determines a position of an icon of a candidate application with the basic size on the display screen, and then calculates a distance between the touch point and a center point of the icon of each candidate application, where an icon of a candidate application with a smallest distance is an icon of a closest candidate application.

Referring to FIG. 1H, the touch point of the finger of the user on the display screen enters the hover magnified hot zone 117, and the touch point is closest to the notes icon in the menu bar 116, so that the notes icon is magnified, the adjacent share icon and messages icon before and after the notes icon are magnified at a secondary level, and a text corresponding to a bottom of the icon may also be magnified accordingly.

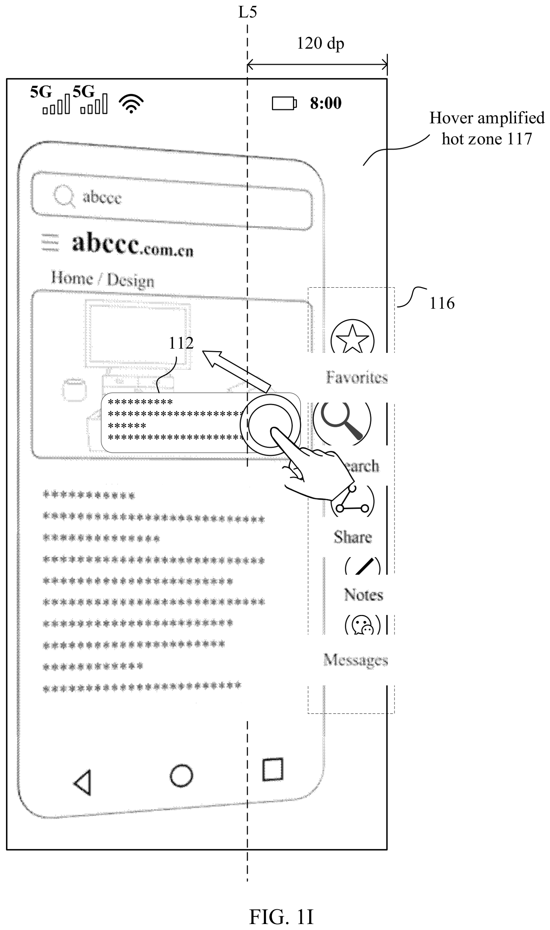

Referring to FIG. 1I, as the user continues to drag the control 112, the touch point also moves to a position shown in FIG. 1I. In FIG. 1I, the touch point of the finger of the user on the display screen is closest to the search icon in the menu bar 116, so that the share icon is magnified, the adjacent favorites icon and share icon before and after the share icon are magnified at a secondary level, and a text corresponding to a bottom of the icon may also be magnified accordingly.

It may be learned from FIG. 1H-FIG. 1I that in the proximity hover animation effect, the closer the touch point of the user on the display screen is to an icon of a candidate application in the menu bar 116, the larger the icon of the corresponding candidate application. In this way, an effect that an icon of a candidate application in the menu bar 116 is adsorbed by a finger of the user can be presented, and a size of the application icon can be increased so that the user pays attention to the icon of the corresponding candidate application.

In some implementations, the electronic device 100 may first display an icon of a candidate application with the base size, and then amplify icons of some candidate applications according to the position of the touch point in the hover amplified hot zone, to present a dynamic change process. In some other implementations, a processing speed of the electronic device 100 is fast enough. An icon of a candidate application with a base size does not need to be first displayed, but amplified icons of some candidate applications may be directly displayed according to the position of the touch point in the hover amplified hot zone.

In another implementation, if the electronic device 100 displays, on the left side of the display screen, a menu bar that includes an icon of a candidate application, and adjusts an original foreground user interface to a left perspective style, the electronic device 100 generates a hover amplified hot zone on the left side of the display screen. The hover amplified hot zone on the left side of the display screen may be used to trigger a hover animation effect of the menu bar on the left side of the display screen.

This is equivalent to that both the left side and the right side of the display screen in the electronic device 100 may include a hover hot zone, and both the left side and the right side of the display screen can trigger a hover animation effect. The hover hot zone is always in the direction of the menu bar on the display screen.

In addition to the proximity hover animation effect triggered by the foregoing described hover hot zone, in some implementations, after the user drags the control 112 to the hover amplified hot zone at the touch point on the display screen, the electronic device may further perform another effect processing on an icon of a candidate application closest to the touch point in the menu bar 116, for example, increase display brightness of the icon of the candidate application, and mark the icon of the candidate application with a prominent color.

### Close-door hot zone

The electronic device 100 displays, on a side of the display screen, a menu bar that includes an icon of a candidate application, and adjusts an original foreground user interface to a perspective style, that is, triggers an open-door effect. Then, the display screen has a corresponding close-door hot zone. The close-door hot zone is used to disable the smart transfer service.

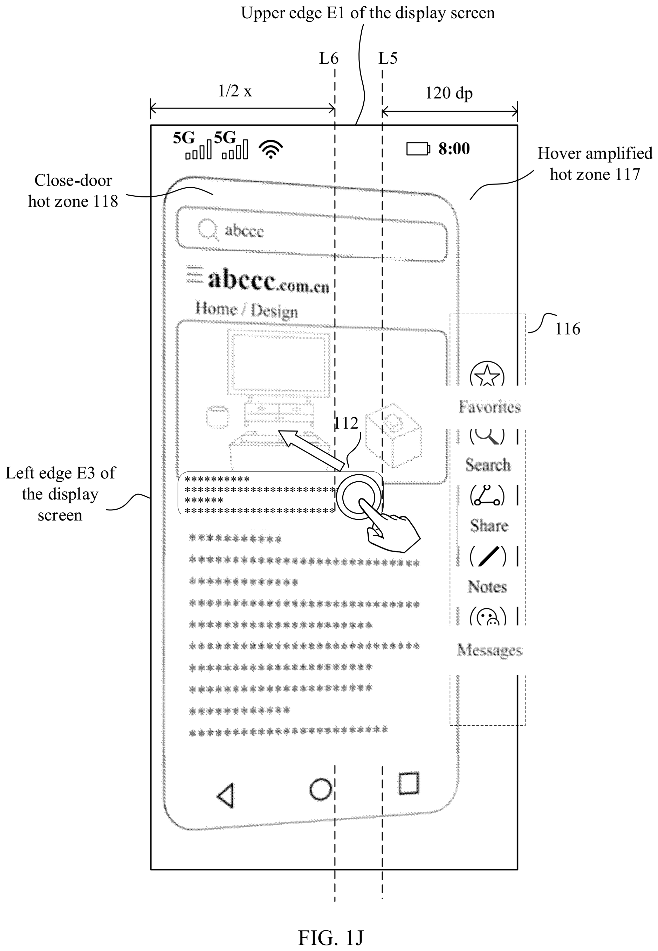

Referring to FIG. 1J, the electronic device 100 displays the menu bar 116 including an icon of a candidate application on the right side of the display screen. After the original foreground user interface is adjusted to the right perspective style, the electronic device 100 generates a close-door hot zone 118 surrounded by a dashed line L6 on the left side of the display screen and the upper edge E1, the left edge E3, and the lower edge E2 of the display screen. A height of the close-door hot zone 118 is the same as the height of the display screen, and a width thereof may be half of the width x of the display screen.

Referring to FIG. 1J-FIG. 1K, the electronic device 100 may detect a user operation by which the user continues to drag the control 112 to the left side of the display screen.

As shown in FIG. 1I-FIG. 1J, the electronic device detects that the user drags the control 112 from the hover amplified hot zone 117 to a partial region in the middle of the display screen, where the partial region is outside the hover amplified hot zone 117 and the close-door hot zone 118, and therefore the electronic device 100 stops displaying the proximity hover animation effect. That is, referring to FIG. 1J, each icon in the menu bar 116 has a same size, which is the base size.

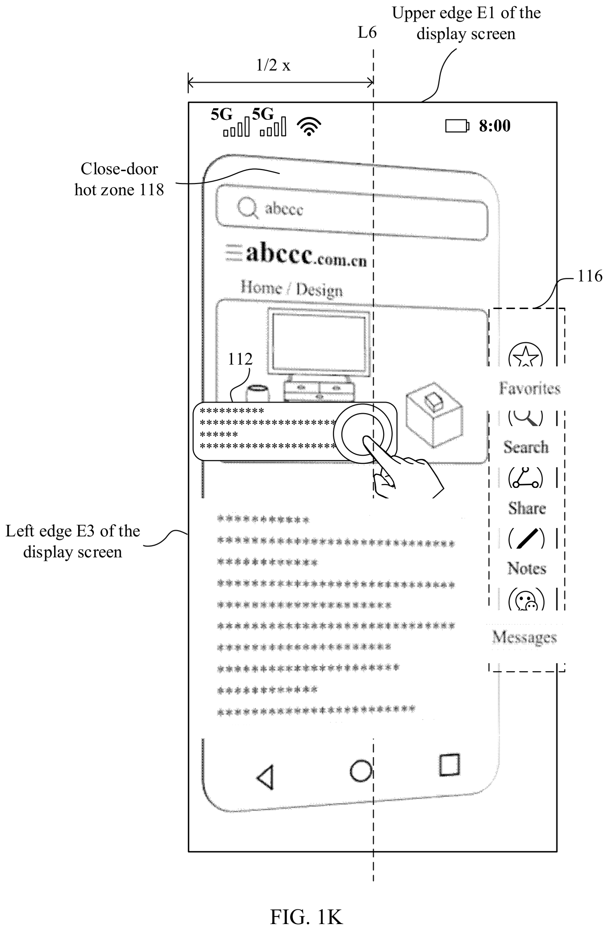

As shown in FIG. 1K, after detecting that the touch point of the finger of the user on the display screen enters the close-door hot zone 118 on the left side of the display screen, the electronic device 100 may disable the smart transfer service. Alternatively, after detecting that the touch point of the finger of the user on the display screen enters the close-door hot zone 118 on the left side of the display screen and stays in the close-door hot zone 118 for specific duration (for example, 600 ms), the electronic device 100 may disable the smart transfer service. The duration may be set as required, which is not limited herein.

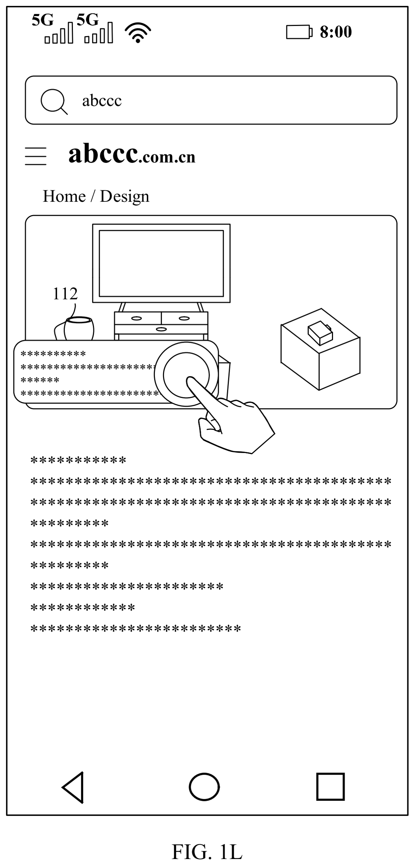

Referring to FIG. 1L, disabling the smart transfer service means that the electronic device 100 stops displaying the menu bar 116 on the right side of the display screen, and adjusts the original foreground user interface (excluding the status bar) from the right perspective style to a perspective-free style. With reference to FIG. 1K and FIG. 1L, style adjustment of the foreground user interface and the menu bar 116 no longer displayed can vividly form a "close door" animation effect.

In another implementation, if the electronic device 100 displays, on the left side of the display screen, a menu bar that includes an icon of a candidate application, and adjusts the original foreground user interface to the left perspective style, the electronic device 100 generates a close-door hot zone on the right side of the display screen. The close-door hot zone on the right side of the display screen may be used to trigger the "close door" animation effect of the menu bar on the left side of the display screen.

This is equivalent to that both the left side and the right side of the display screen in the electronic device 100 may include a close-door hot zone, and both the left side and the right side of the display screen can trigger the "close door" animation effect. The close-door hot zone is always located in the opposite direction of the menu bar on the display screen.

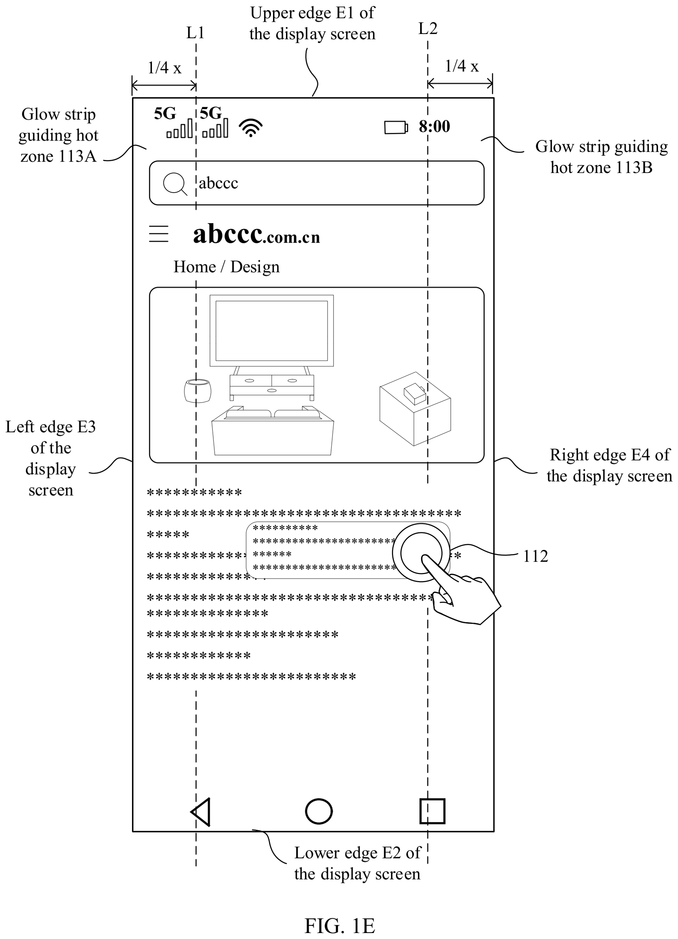

In this application, in a process of dragging the control 112 shown in FIG. 1E-FIG. 1J, the finger of the user may continuously contact the display screen, that is, the drag operation may be continuous and uninterrupted.

After the electronic device 100 detects that the touch point of the finger of the user on the display screen enter the open-door hot zone, and starts the smart transfer service (that is, display the menu bar 116), if the finger of the user leaves the display screen, that is, if the electronic device does not detect the touch point, the electronic device 100 disables the smart transfer service (that is, stops displaying the menu bar 116). For example, if the finger touch point shown in FIG. 1H disappears, the electronic device also stops displaying the menu bar 116 in FIG. 1H. This is equivalent to that in this application, the user may disable the smart transfer service by using the close-door hot zone, or may disable the smart transfer service by stopping touching the display screen.

### Data transmission

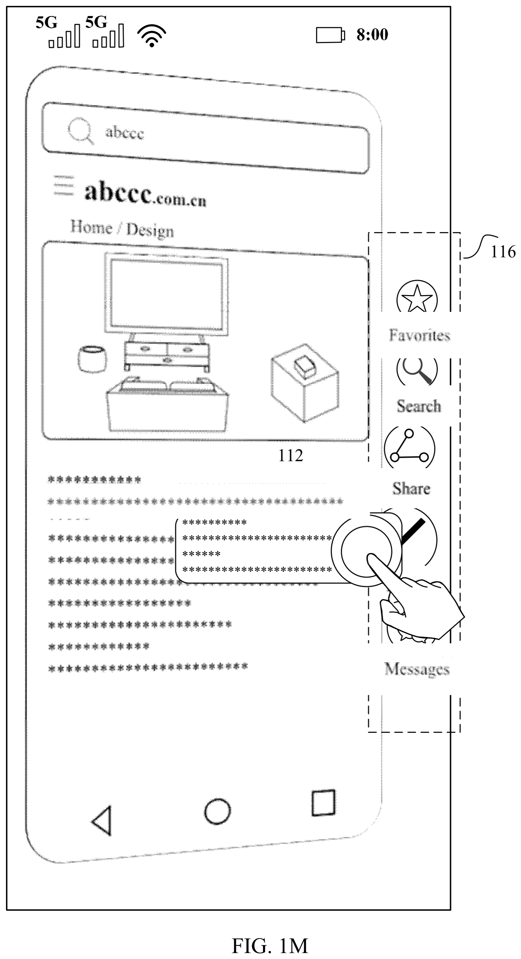

FIG. 1M-FIG. 1N show a user interface for transmitting data by using a smart transfer service.

Referring to FIG. 1M, after detecting that the user drags the control 112 to the open-door hot zone 115B on the right side, and displaying the menu bar 116, the electronic device 100 may detect a user operation by which the user continues to drag the control 112 to a region in which an icon of any candidate application in the menu bar 116 is located and release the control. Specifically, referring to FIG. 1M, the electronic device 100 may detect a user operation by which the user continues to drag the control 112 to the notes application icon and release the control. Therefore, the electronic device 100 may determine that the notes application is a target application. After detecting that the control 112 is dragged to the notes application icon, the electronic device 100 may highlight the notes application icon, for example, increase, discolor, improve brightness, and may further output a vibration signal, so as to prompt the user to currently select the notes application as the target application, so as to avoid false transmission.

In some implementations, after detecting the user operation by which the user continues to drag the control 112 to a region in which an icon of any candidate application in the menu bar 116 is located and release the icon, the electronic device 100 may further display an animation effect of adsorbing or receiving the control 112 into the icon of the corresponding candidate application, so as to prompt the user that the electronic device is to transmit to-be-transmitted data to the corresponding candidate application.

Subsequently, the electronic device 100 may write to-be-transmitted data (that is, the target text 111) corresponding to the control 112 to the notes application.

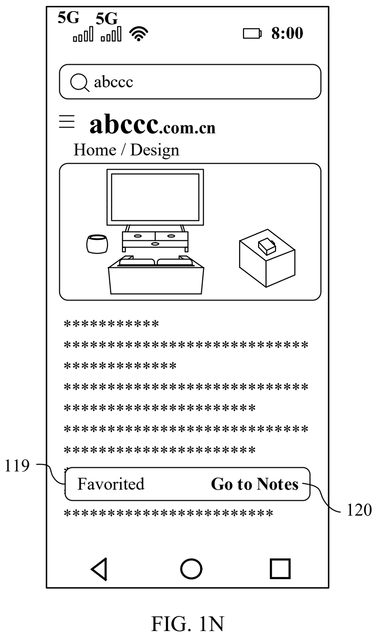

Referring to FIG. 1N, after writing the target text 111 to the notes application, the electronic device 100 may close the menu bar 116 of the smart transfer service to display an original user interface again. Optionally, the electronic device 100 may further display a prompt window 119. The prompt window 119 may prompt the user that the transfer succeeds, that is, the to-be-transmitted data selected by the user has been successfully written to the target application. The prompt window 119 may further include a control 120. The control 120 may be configured to enable the target application for receiving the foregoing to-be-transmitted data, for example, the notes application, so that the user continues to edit, in the target application, the data written by the smart transfer service.

This is not limited to that the electronic device 100 shown in FIG. 1N directly writes the to-be-transmitted data into the target application. In another implementation, after determining the target application, the electronic device 100 may further display a window provided by the target application. The window may display one or more options. The user may set, according to the one or more options, a manner of using the to-be-transmitted data in the target application (for example, a print parameter or a contact shared with). Then, the target application may process the to-be-transmitted data in a manner of using the one or more options.

### Hot zones in a mobile phone

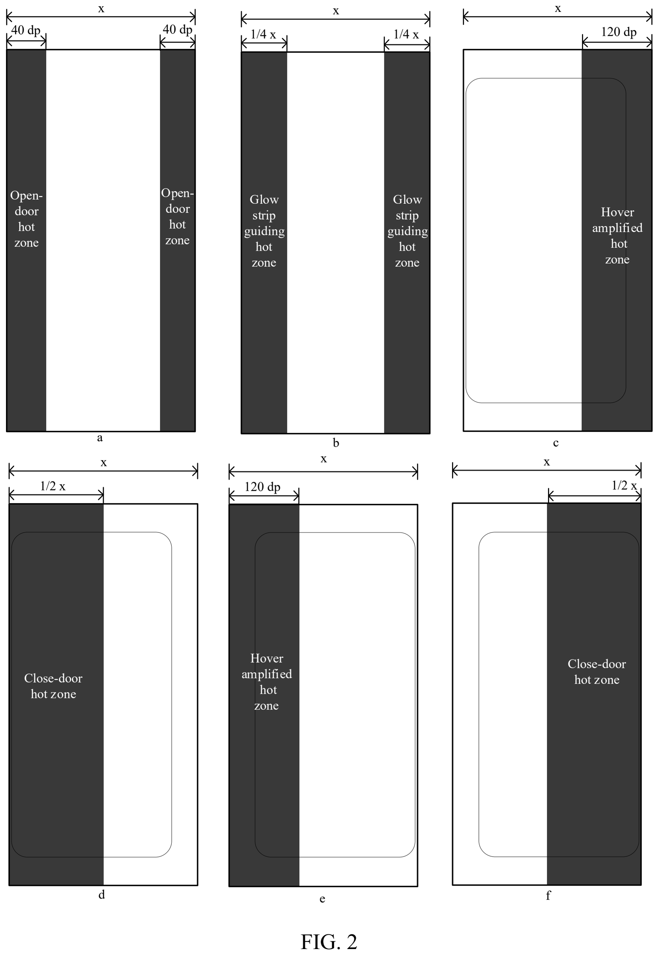

FIG. 2 shows an example of various hot zones in a mobile phone in a portrait state.

In FIG. 2,
a shows an open-door hot zone, including two regions on the left and right sides of the display screen, each occupying 40 dp of the width of the display screen;
b shows a glow strip guiding hot zone, including two regions on the left and right sides of the display screen, each occupying 1/4 of the width of display screen;
c shows a hover amplified hot zone when "the right door is opened", including a region on the right side of the display screen, occupying 120 dp of the width of the display screen;
d shows a close-door hot zone when "the right door is opened", including a region on the left side of the display screen, occupying 1/2 of the width of the display screen;
e shows a hover amplified hot zone when "the left door is opened", including a region on the left side of the display screen, occupying 120 dp of the width of the display screen; and
f shows a close-door hot zone when "the left door is opened", including a region on the right side of the display screen, occupying 1/2 of the width of the display screen.

In FIG. 1A-FIG. 1N and FIG. 2, that an electronic device in a form of a mobile phone is used as an example to enumerate hot zones and functions of the mobile phone in a portrait state. In this embodiment of this application, electronic devices of a same form may have different hot zones in different states. The states herein may include a portrait state and a landscape state.

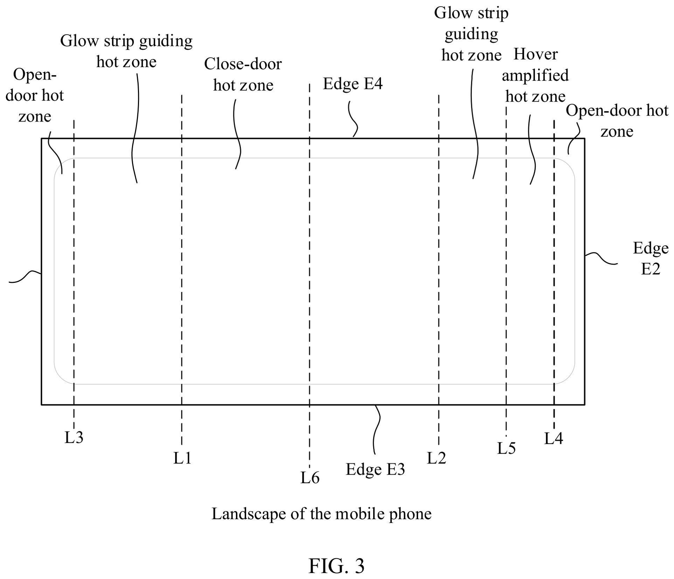

Referring to FIG. 3, FIG. 3 shows various hot zones of a mobile phone in a landscape state.

Different from the portrait state in FIG. 1A-FIG. 1N and FIG. 2, because the mobile phone in FIG. 3 is in a landscape state, a position of each edge surface relative to the user changes. Edges in FIG. 3 may correspond to edges of same labels in FIG. 1A-FIG. 1N.

In FIG. 3,
a region surround by a dashed line L3 and an edge E1, an edge E4, and an edge E3 of the display screen, and a region surrounded by a dashed line L4 and an edge E2, the edge E4, and the edge E3 of the display screen are open-door hot zones;
a region surround by a dashed line L1 and the edge E1, the edge E4, and the edge E3 of the display screen, and a region surrounded by a dashed line L2 and the edge E2, the edge E4, and the edge E3 of the display screen are glow strip guiding hot zones;
a region surround by a dashed line L5 and the edge E2, the edge E4, and the edge E3 of the display screen is a hover amplified hot zone in "the right door is opened" effect; and
a region surround by a dashed line L6 and the edge E1, the edge E4, and the edge E3 of the display screen is a close-door hot zone in "the right door is opened" effect.

Certainly, in "the left door is opened" effect, both the hover amplified hot zone and the close-door hot zone in FIG. 3 are on the opposite side of the currently displayed direction.

This is not limited to an electronic device in a form of a mobile phone. Another electronic device in a form such as a foldable screen mobile phone or a tablet computer may also have different hot zones in a landscape state and a portrait state. A region of each hot zone on the display screen is similar to that of the hot zone in the foregoing mobile phone. For details, refer to the foregoing related content.

A height of each hot zone mentioned in this application may be measured according to a percentage of the height of the display screen, or may be measured according to occupied dp of the height of the display screen. A width of the hot zone is similar, which is not limited herein.

A name of each hot zone mentioned in this application is merely an example. A function of each hot zone is already recorded in the foregoing specification, and the name of each hot zone does not constitute a limitation on this application.

A size (that is, a dimension), a position, a shape, and the like of each hot zone mentioned in the foregoing UI are examples. In specific implementation, a size (that is, a dimension), a position, a shape, and the like of each hot zone in the electronic device may be set according to a user requirement and a use feeling, which is not specifically limited in this application.

Each hot zone shown in a gray filling effect in the foregoing UI embodiment is merely used for description. In the user interface actually presented by the electronic device to the user, the corresponding hot zone does not include the gray filling effect. That is, the electronic device does not need to remind the user of the position of each hot zone, and the user may feel existence of each hot zone in a process of using each hot zone function.

### Preventing a false touch in an open-door hot zone

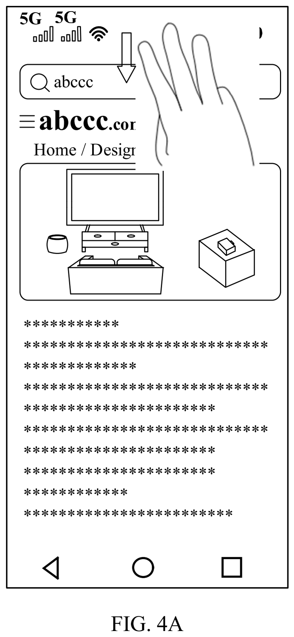

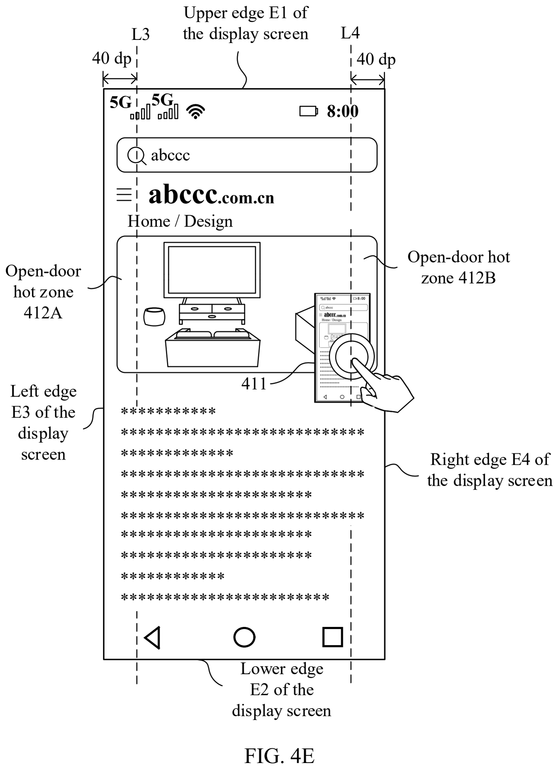

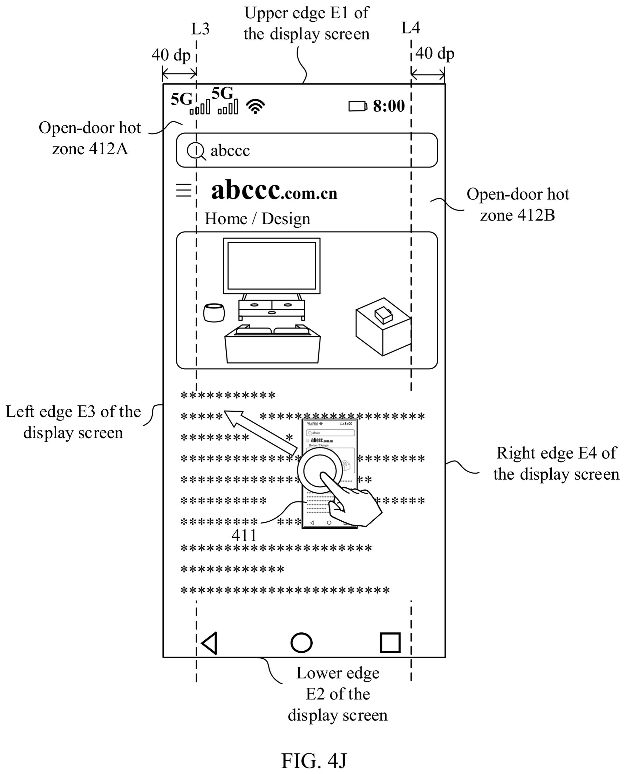

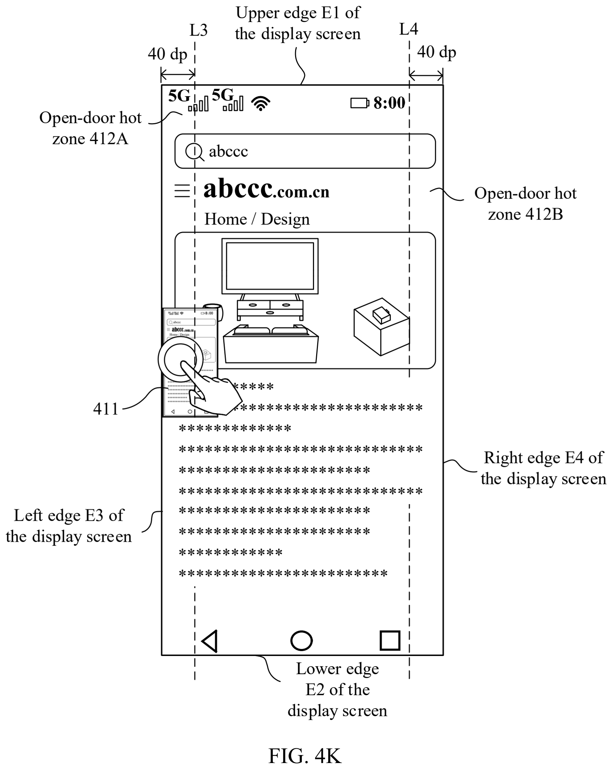

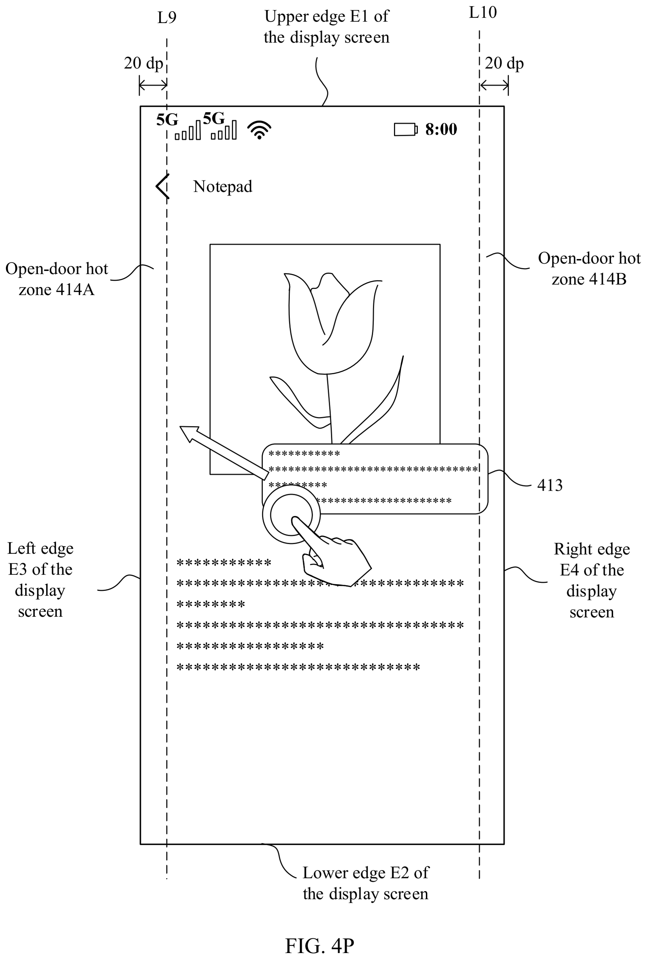

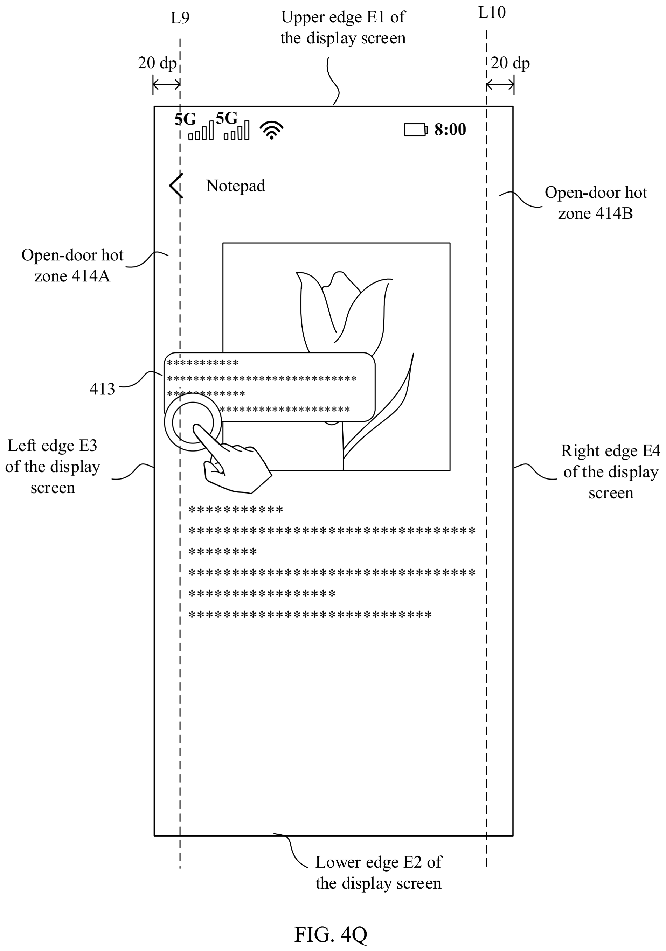

FIG. 4A-FIG. 4F show a manner of sharing a screenshot.

Referring to FIG. 4A, in a process of displaying a user interface shown in FIG. 4A, the electronic device 100 may detect a screenshot operation. The screenshot operation may be implemented by using a physical key acting on the electronic device 100, for example, a power key or a volume key, or may be implemented by using a touch operation acting on the display screen of the electronic device 100, for example, a three-finger swipe-down operation. This is not limited in this application.

In response to the screenshot operation, the electronic device 100 may save a user interface on the display screen at a current moment as one frame of image, that is, a screenshot image, also referred to as a screenshot. The electronic device 100 may write the screenshot to a memory of the electronic device 100 for saving, so that a user can browse the screenshot at any time by using an access operation.

In this embodiment of this application, the electronic device 100 may further display a preview image of the screenshot on the display screen, so as to prompt the user that one frame of screenshot is obtained.

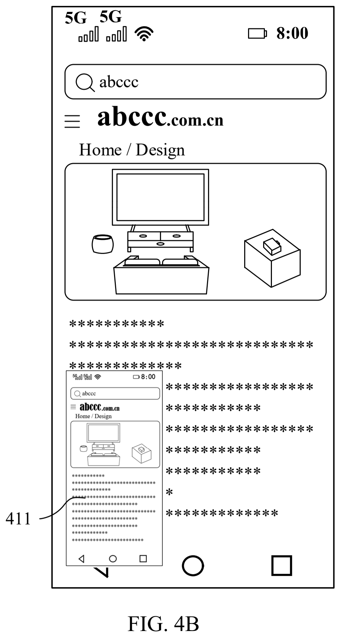

FIG. 4B is a user interface on which an electronic device displays a screenshot preview on a display screen. As shown in FIG. 4B, the electronic device 100 may display an image 411 in a lower left corner region of the display screen. The image 411 may be a screenshot preview of the user interface shown in FIG. 4A. The user may preview, by using the image 411, the screenshot obtained by the screenshot operation. The lower left corner region of the display screen may be referred to as a default screenshot display region. Other than the lower left corner, the default screenshot display region may be an upper right corner, a lower right corner, an upper left corner, or the like of the display screen. This is not limited in this embodiment of this application.

The electronic device 100 may maintain displaying the image 411 for a period of time according to a preset timer. The period of time is, for example, 3 seconds. After timing of the timer ends, the electronic device 100 may no longer display the image 411.

In this embodiment of this application, in a process of displaying the image 411, the electronic device 100 may detect whether there is a user operation acting on the image 411.

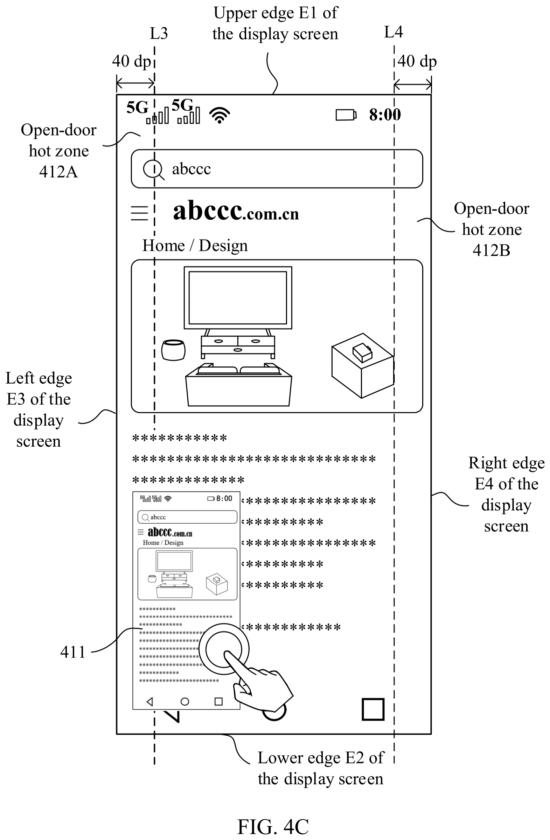

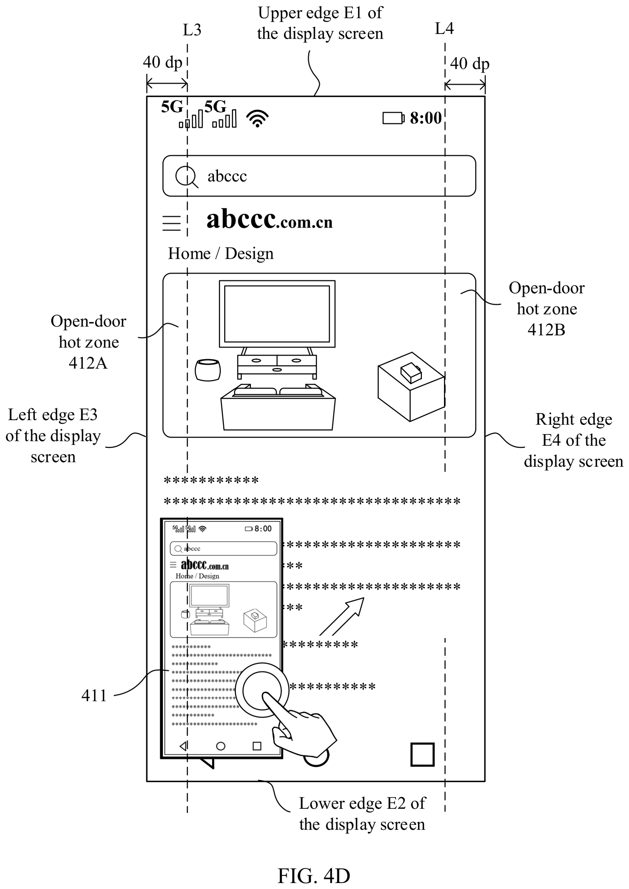

Referring to FIG. 4C, the electronic device 100 may detect an operation acting on the image 411 and long pressing the display screen (hereinafter referred to as a long press operation), and a touch point of the finger of the user is located in another region different from the open-door hot zone 412A and the open-door hot zone 412B. In response to the user operation, the electronic device 100 may switch the image 411 to a floating state shown in FIG. 4D. The image 411 in a floating state may adjust a display position in real time following a movement track of a user touch operation. The image 411 in a floating state is a floating element of this application.

In some implementations, after the electronic device 100 switches the image 411 to a floating state, no prompt information may be output on the user interface, that is, it appears that there is no difference before and after switching. In another implementation, after the electronic device 100 switches the image 411 to the floating state, some prompt information (for example, a black border is added to the image 411 in FIG. 4D, or another animation effect is displayed around the image 411) may be output on the user interface, so as to prompt the user that the image 411 currently can be dragged by the user.

Referring to FIG. 4D-FIG. 4E, after generating the image 411 in a floating state, the electronic device 100 may detect an operation of continuing to drag the image 411 in a floating state toward the right side of the display screen to the open-door hot zone 412B. In response to this operation, the electronic device 100 may enable the smart transfer service, that is, display, on the right side of the display, a menu bar including icons of a plurality of candidate applications. Then, the electronic device 100 may further detect an operation of continuing to drag the image 411 in a floating state to a region in which an icon of a candidate application in the menu bar is located, and send an original screenshot of the image 411 to the application corresponding to the icon of the candidate application in response to the operation.

After the user triggers the electronic device 100 to generate a floating element, there may be a plurality of intentions, for example, dragging the floating element to the open-door hot zone to trigger the smart transfer service, or dragging the floating element to another position on the display screen (for example, dragging a preview image of a screenshot or dragging a position of a text in Notepad). The open-door hot zone may overlap another position on the display screen. Therefore, when the user drags the floating element, the electronic device 100 needs to accurately identify a user intention, so as to accurately respond to a user requirement and avoid a misoperation.

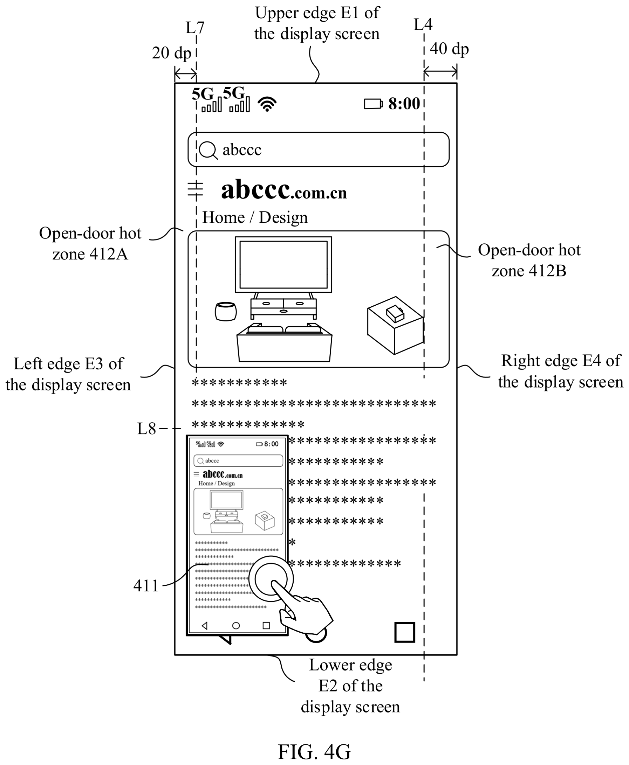

**FIG. 4G** **shows a solution for preventing a false touch by reducing an open-door hot zone.**

The user interface shown in FIG. 4G may be displayed when the electronic device detects a long press operation acting on the image 411 in FIG. 4B.

As shown in FIG. 4G, the open-door hot zone in the user interface shown therein includes a region 412A surrounded by a dashed line L7, a dashed line L8, an upper edge E1 and a left edge E3 of the display screen, and a region 412B surrounded by a dashed line L4, the upper edge E1, a right edge E4, and a lower edge E2 of the display screen.

Compared with a conventional open-door hot zone before the false touch prevention solution is enabled (such as the open-door hot zone in FIG. 1G or FIG. 4G), the open-door hot zone in FIG. 4G is adjusted in one or more aspects of the following:
1. A default screenshot display region of the electronic device in FIG. 4G is located at a lower left corner of the display screen. Therefore, a width of an open-door hot zone 412A on a same side (that is, the left side of the display screen) is shorter than a width of a conventional door hot zone on a same side. For example, the width of the open-door hot zone 412A in FIG. 4G may be 1/2 of the width of the open-door hot zone 412A in FIG. 4C.
2. A default screenshot display region of the electronic device in FIG. 4G is located at a lower left corner of the display screen. Therefore, a height of the open-door hot zone 412A on a same side (that is, the left side of the display screen) may be somewhere from the top of the display screen to the middle of the display screen, rather than reaching all the way down. For example, the height of the open-door hot zone 412A may be from the top of the display screen to the position of the top of the image 411.

Based on any one or more of the foregoing adjustments, a range of the open-door hot zone is smaller than a range of a conventional open-door hot zone. In a process of floating the image 411 by using a user operation (for example, a long press operation), a probability that a touch point directly enters an open-door hot zone is reduced, and a probability of directly triggering the smart transfer service after floating the image 411 is reduced.

In this way, the user can more easily and conveniently select, in a process of dragging the image 411, to trigger the smart transfer service or simply move the position of the image 411 on the display screen. Specifically, the user drags the image 411 to the open-door hot zone 412A on the left side of FIG. 4G or the open-door hot zone 412B on the right side of FIG. 4G, and then the smart transfer service can be triggered. The user drags the image 411 to a region outside the open-door hot zone in FIG. 4G, so that the position of the image 411 on the display screen can be moved.

In another implementation, if the default screenshot display region is located in another region of the display screen of the electronic device, the open-door hot zone after the floating element is generated may be correspondingly adjusted according to the default screenshot display region. For example, if the default screenshot display region is located in the upper right corner, the width of the open-door hot zone on the right side of the display screen may be half the width of the conventional open-door hot zone on the right side, and the height thereof is from the top to the position of the bottom of the preview image of the screenshot.

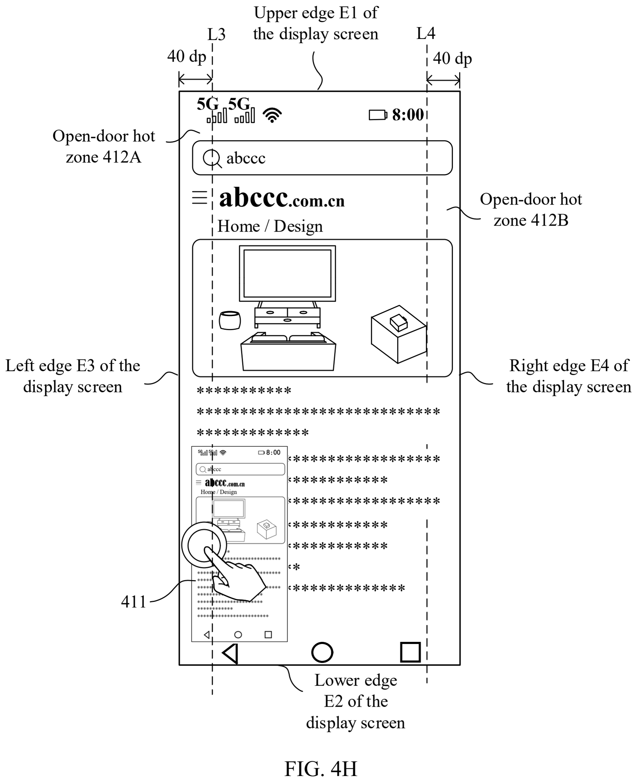

**FIG. 4H****-****FIG. 4L** **show a solution for preventing a false touch by triggering a smart transfer service only after entering an open-door hot zone twice.**

Referring to FIG. 4H, the electronic device 100 displays an image 411 in a lower left corner region of the display screen in response to a screenshot operation of the user.

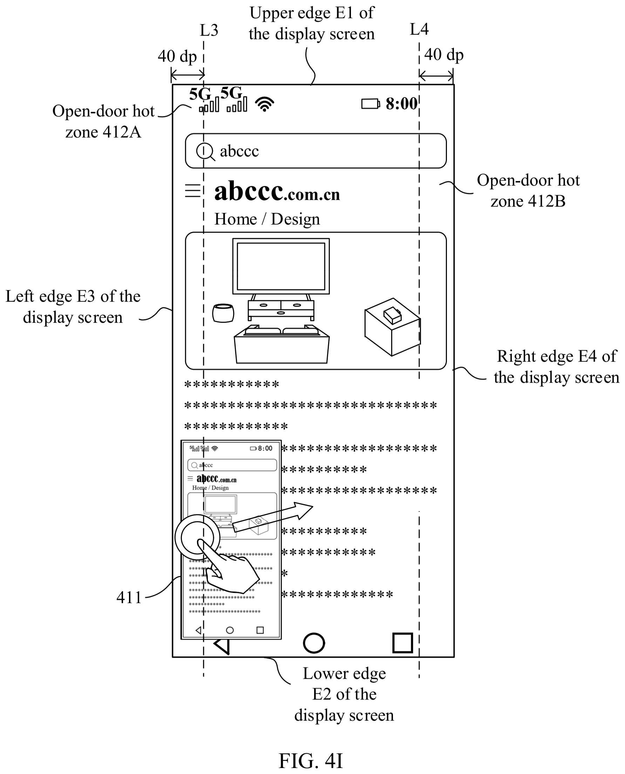

Then, the electronic device 100 may detect a long press operation acting on the image 411 (subsequently referred to as a long press operation). In response to the user operation, the electronic device 100 may switch the image 411 to a floating state shown in FIG. 4I.

As shown in FIG. 4H, when the electronic device 100 detects a long press operation on the image 411, the touch point of the finger of the user on the display screen is located in the open-door hot zone on the left side of the display screen. In this case, although the touch point enters the open-door hot zone, the electronic device does not trigger the smart transfer service, that is, does not trigger the "open door" animation effect.

Referring to FIG. 4I-FIG. 4L, the electronic device 100 may detect a user operation of dragging the image 411 to the open-door hot zone on the left, and then dragging the image 411 back to the open-door hot zone on the left side. Only after detecting that the touch point of the finger of the user on the display screen enters the open-door hot zone for the second time, the electronic device triggers the smart transfer service, that is, triggers the "open door" animation effect.

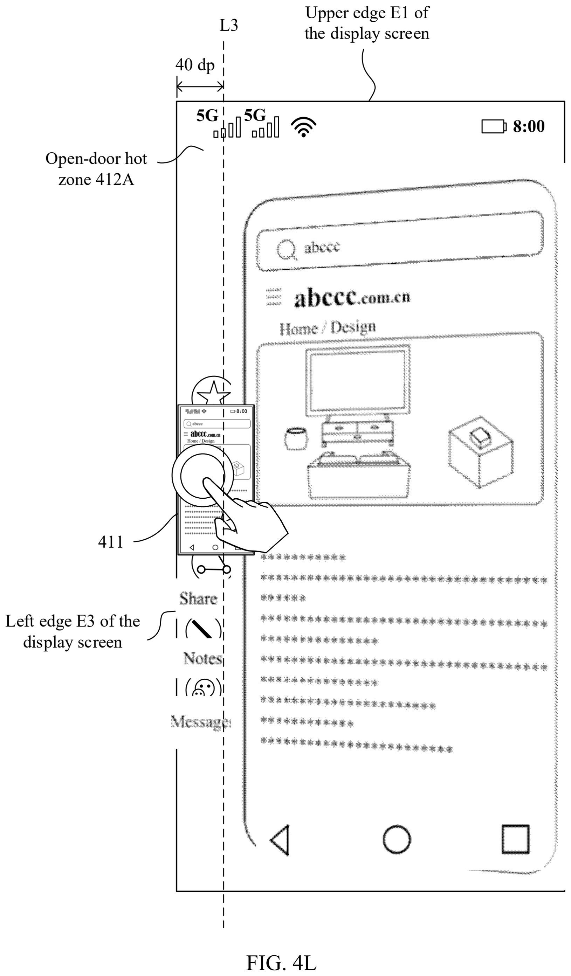

Referring to FIG. 4L, FIG. 4L shows a menu bar displayed after the electronic device triggers the smart transfer service after the touch point of the finger of the user enters the open-door hot zone for the second time on the display screen.

It can be learned that, after the floating element is generated, if the touch point of the finger of the user on the display screen is located in the open-door hot zone for the first time, the smart transfer service is not triggered. Only after the touch point of the finger of the user on the display screen moves out of the open-door hot zone and enters the open-door hot zone for the second time, the smart transfer service is triggered. That the touch point is located in the open-door hot zone for the first time herein means that the touch point of the user operation used to enable the element to float on the display screen is located in the open-door hot zone. The open-door hot zones in which the touch point is located for the two times may be the open-door hot zone on the left side of the display screen and the open-door hot zone on the right side of the display screen, or both are the open-door hot zone on a same side.

In this way, the user can more easily and conveniently select, in a process of dragging the image 411, to trigger the smart transfer service or simply move the position of the image 411 on the display screen. Specifically, the user drags the image 411 to the open-door hot zone in FIG. 4D for the second time, and then the smart transfer service is triggered. The user directly drags the image 411 to a region outside the open-door hot zone in FIG. 4D, so that the position of the image 411 on the display screen can be moved.

In another implementation, if the electronic device detects a long press operation on the image 411, the touch point of the finger of the user on the display screen is outside the open-door hot zone, after detecting that the user drags the image 411 to the open-door hot zone for the first time, the smart transfer service can be triggered.

In the foregoing implementations, in addition to that the touch point is located in the open-door hot zone, the operation of triggering the smart transfer service may further include staying in the open-door hot zone for specific duration (for example, 600 ms). The duration may be set as required, which is not limited herein.

This is not limited to to-be-transmitted data of a screenshot type. After a floating element is correspondingly generated for to-be-transmitted data of another type, any one of the foregoing manners may be used to prevent a false touch.

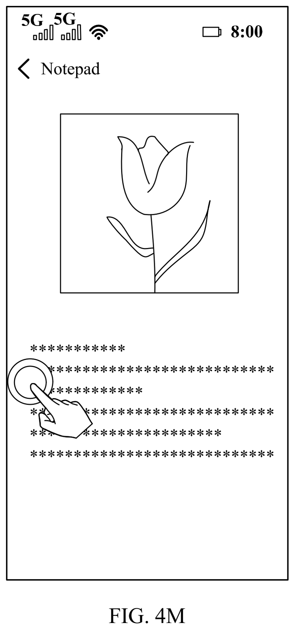

**FIG. 4M****-****FIG. 4R** **show a solution for preventing a false touch by combining the foregoing two manners.**

In the solution for preventing a false touch shown in FIG. 4R-FIG. 4R, the electronic device reduces the open-door hot zone, and triggers the smart transfer service only after the touch point of the user operation enters the open-door hot zone twice.

FIG. 4M shows a user interface provided by the electronic device 100.

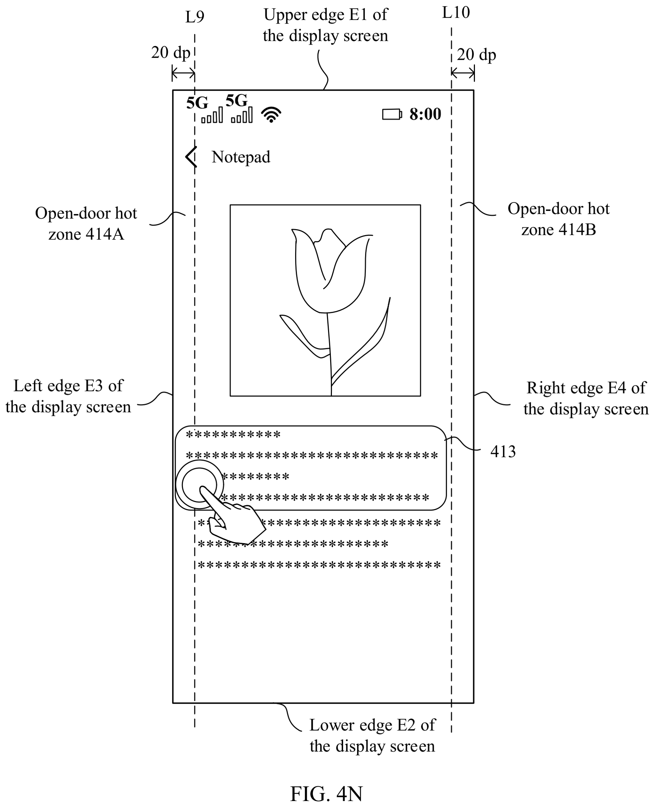

FIG. 4N shows a control 413 in a floating state generated after the electronic device 100 detects a user operation acting on FIG. 4M. For a specific generation process of the control 413, refer to the foregoing related descriptions in FIG. 1A-FIG. 1D.

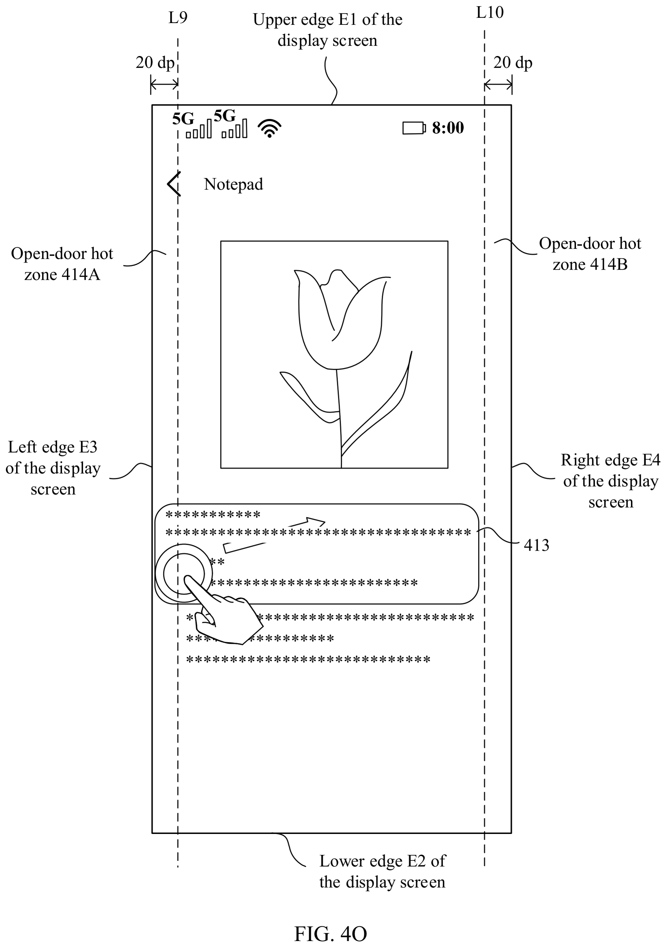

Referring to FIG. 4N and FIG. 4O, the display screen have two corresponding open-door hot zones: a region 412A surrounded by a dashed line L9 and an upper edge E1, a left edge E3, and a lower edge E2 of the display screen, and a region 412B surrounded by a dashed line L4 and the upper edge E1, a right edge E4, and the lower edge E2 of the display screen.

Compared with a conventional open-door hot zone before the solution for preventing a false touch is enabled (for example, the open-door hot zone in FIG. 1G), a width of the open-door hot zone 414A on the left side of the display screen is shorter than a width of the conventional open-door hot zone on the left side of the display screen. For example, the width of the open-door hot zone 414A in FIG. 4N may be 1/2 of the width of the open-door hot zone 412A in FIG. 4C.

In some implementations, a width of the open-door hot zone 414B on the right side of the display screen is shorter than a width of the conventional open-door hot zone on the right side of the display screen. For example, the width of the open-door hot zone 414B in FIG. 4N may be 1/2 of the width of the open-door hot zone 412B in FIG. 4C.

As shown in FIG. 4N, when the electronic device 100 detects a long press operation on the control 413, the touch point of the finger of the user on the display screen is located in the open-door hot zone 414A on the left side of the display screen. In this case, although the touch point enters the open-door hot zone, the electronic device does not trigger the smart transfer service, that is, does not trigger the "open door" animation effect.

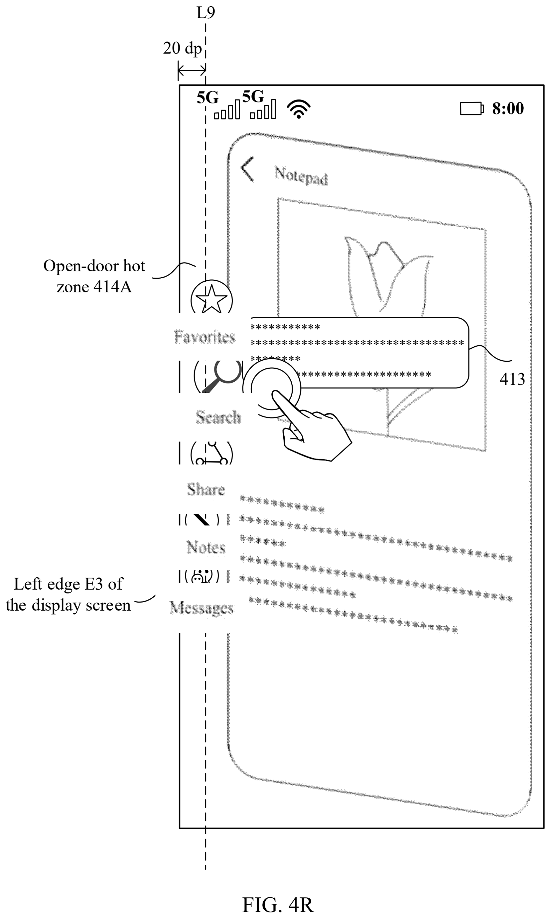

Referring to FIG. 4N-FIG. 4R, the electronic device 100 may detect a user operation of dragging the control 413 to the open-door hot zone on the left, and then dragging the control 413 back to the open-door hot zone on the left side. Referring to FIG. 4R, after detecting that the touch point of the finger of the user on the display screen enters the open-door hot zone for the second time, the electronic device triggers the smart transfer service, that is, triggers the "open door" animation effect. For the definitions of entering the open-door hot zone for the first time and the second time, refer to the previous related descriptions.

In some implementations, after generating the control 413 in a floating state, the electronic device 100 can either shorten the width of the open-door hot zone or enter the open-door hot zone twice to trigger the smart transfer service, without needing to perform both.

In some implementations, the electronic device 100 may execute, for a scenario in which to-be-transmitted data is a text and a position of the text in the user interface can be dragged, the foregoing solution for preventing a false touch by combining the foregoing two manners. Such a scenario is generally provided by a text editing-type application, and therefore, the electronic device may execute the foregoing solution for preventing a false touch when it is recognized that a text editing-type application is currently enabled, or when it is recognized that a foreground application is a text editing-type application. For example, for a text in Notepad, the foregoing solution for preventing a false touch may be executed. Specifically, after recognizing that the electronic device 100 is currently in the foregoing scenario, the electronic device 100 may execute the foregoing solution for preventing a false touch.

In this embodiment of this application, a scenario in which the foregoing solution for preventing a false touch by combining the foregoing two manners is executed may be provided by a fifth application, and the fifth application may include a word editing-type application.

This is not limited to to-be-transmitted data of a text type. After a floating element is correspondingly generated for to-be-transmitted data of another type, the foregoing combination solution of shortening the width of the open-door hot zone and entering the open-door hot zone twice to trigger the smart transfer service may be used to prevent a false touch.

### Window avoidance

One category of floating element is a floating window. The floating window may be obtained according to a screen splitting operation, and may float above another user interface.

When the floating element is a floating window, a display screen also has a corresponding open-door hot zone. Interaction between a user and the floating window involves avoidance for a smart transfer service, which is described in the following.

### Dragging the floating window does not trigger the smart transfer service.

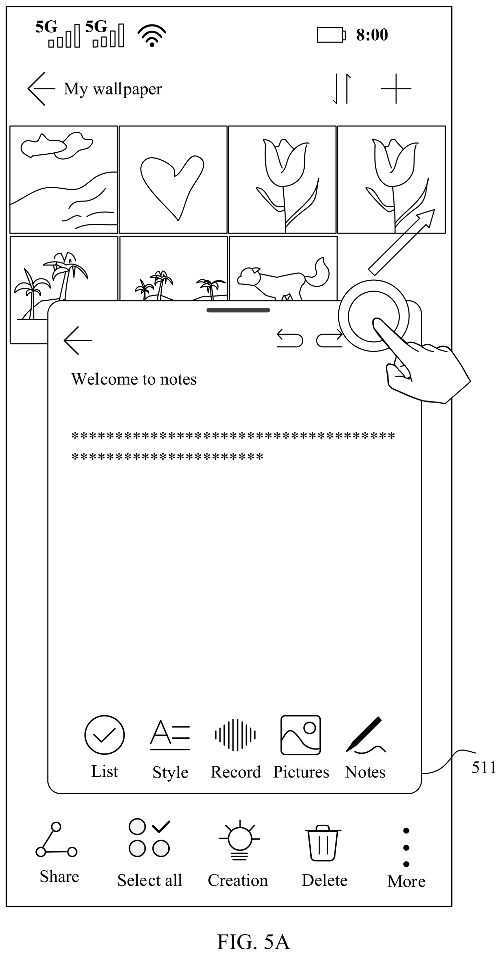

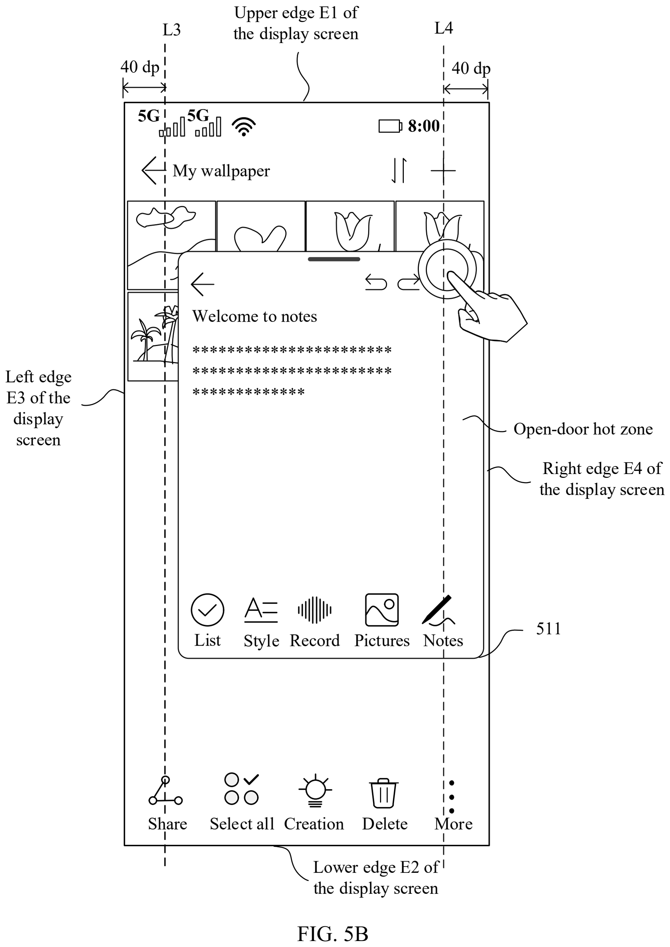

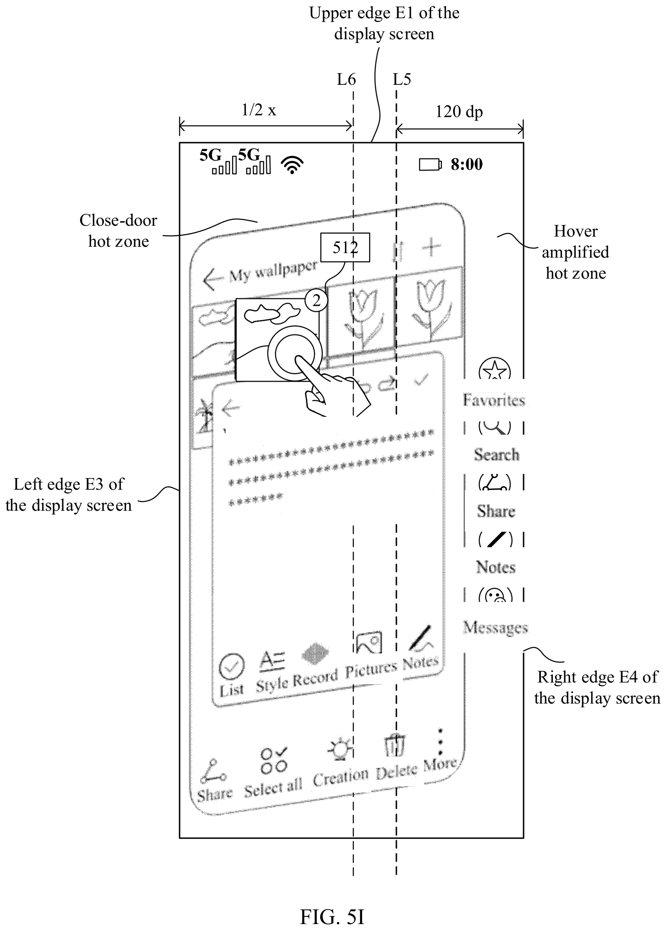

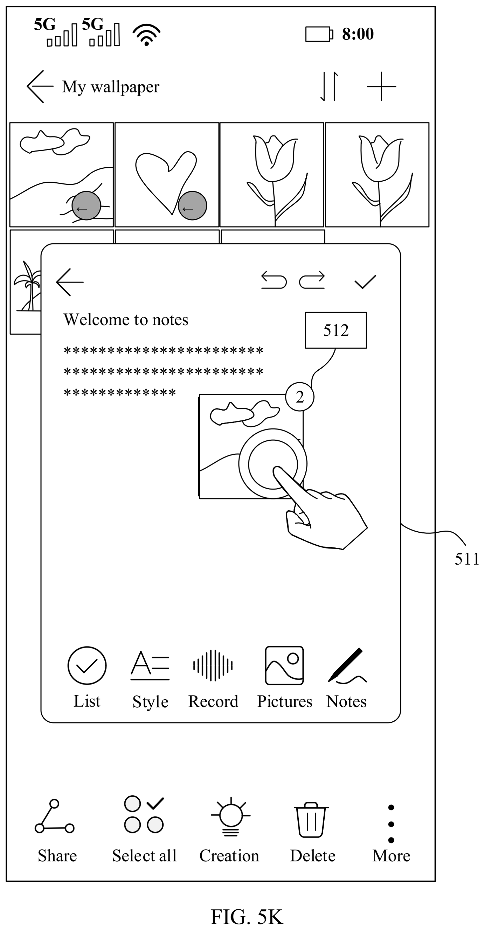

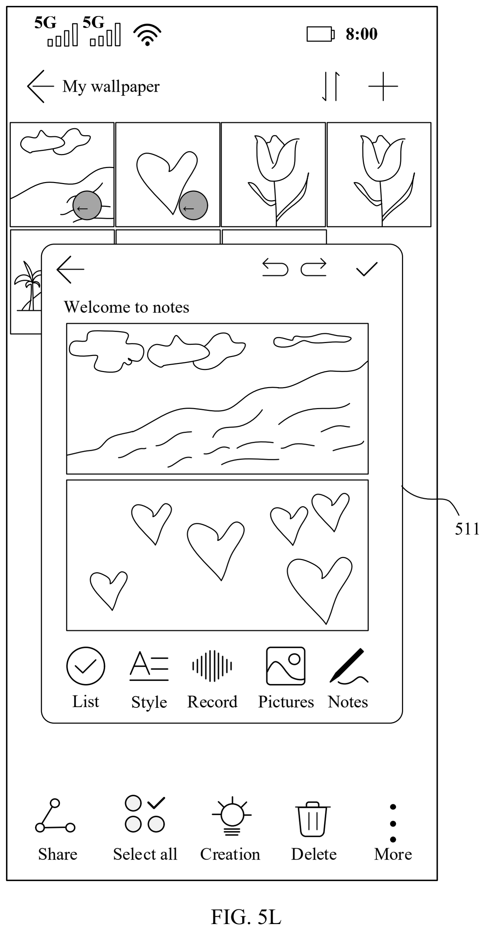

FIG. 5A is a user interface provided by an electronic device 100 in a split-screen scenario. As shown in FIG. 5A, the user interface displays content provided by two application programs at the same time, including a user interface provided by a gallery application on a lower layer, and a window 511 provided by a notes application floating on an upper layer.

Referring to FIG. 5A-FIG. 5B, the electronic device 100 may detect a drag operation of the user acting at any position of the window 511 or at a bar at the top of the window 511, and then adjust the position of the window 511 on the display screen in real time with the movement track of the drag operation of the user. In this process, even if a touch point of the drag operation moves to an open-door hot zone, the electronic device 100 does not trigger the smart transfer service, but adjusts only the position of the window 511 on the display screen.

### Preventing a false touch in a floating window scenario

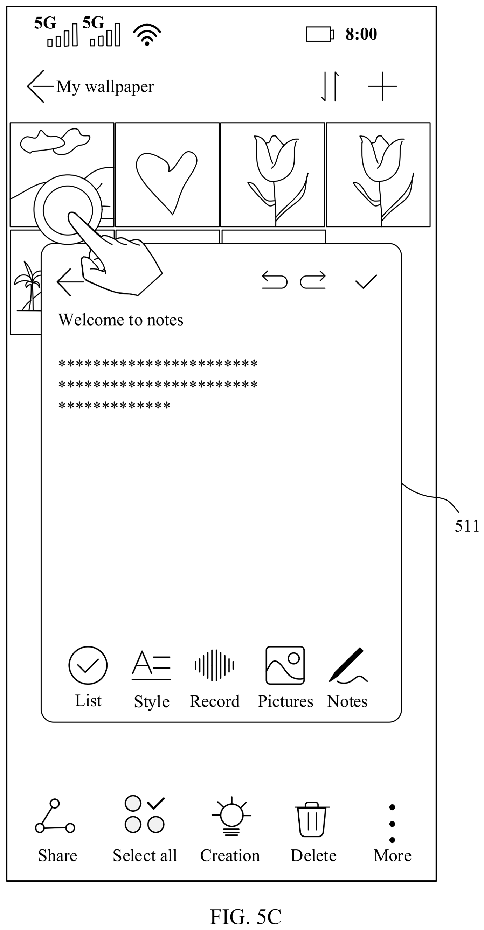

Referring to FIG. 5C, one or more icons are displayed on a user interface provided by a gallery at a lower layer, and one icon corresponds to one image (such as a photo or a video). As shown in FIG. 5C-FIG. 5D, the electronic device may detect a user operation (for example, a tap operation) acting on one or more icons. In response to the operation, the electronic device 100 selects a corresponding icon, and displays a selected mark on the selected icon.

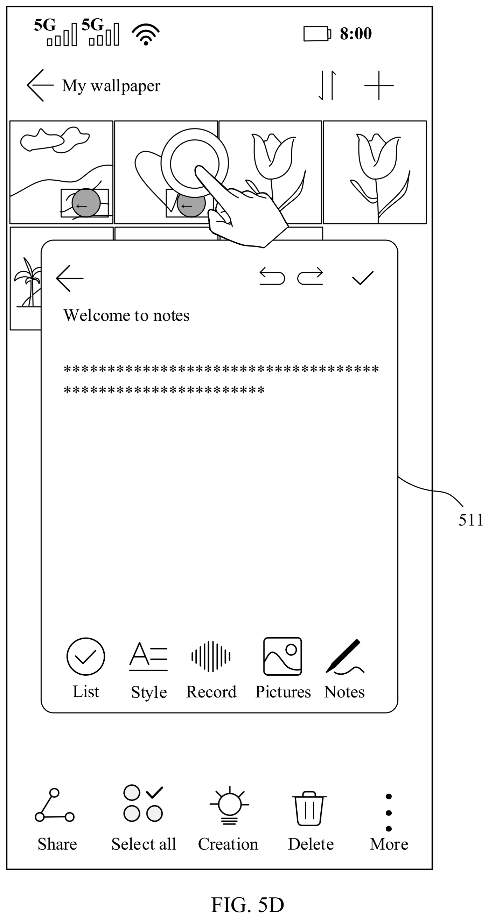

Referring to FIG. 5D-FIG. 5E, after one or more icons are selected, the electronic device 100 may detect a long press operation acting on the screen. In response to the foregoing operation, the electronic device 100 may display a control 512 in a floating state. The control 512 may include a preview image or a thumbnail of the selected icon, and an upper right corner mark (for example, "2"), where the corner mark is used to indicate a quantity of selected icons, that is, a quantity of selected images.

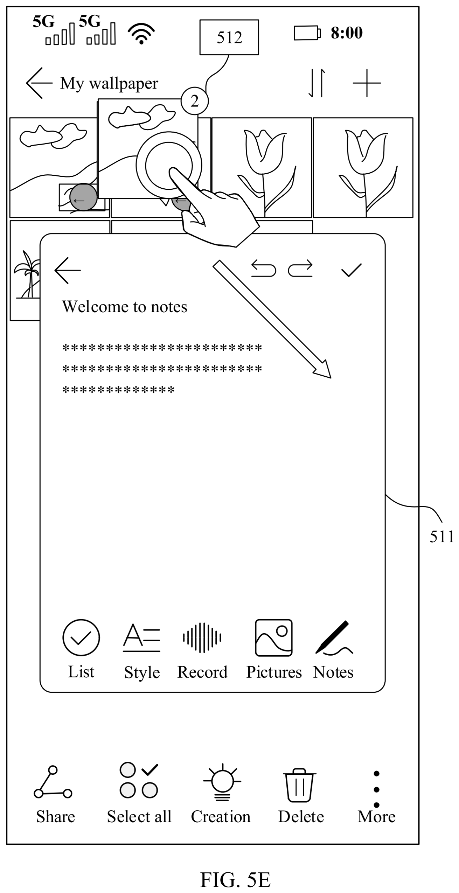

Referring to FIG. 5E, the display screen has two corresponding open-door hot zones, that is, an open-door hot zone on the left side of the display screen and an open-door hot zone on the right side of the display screen.

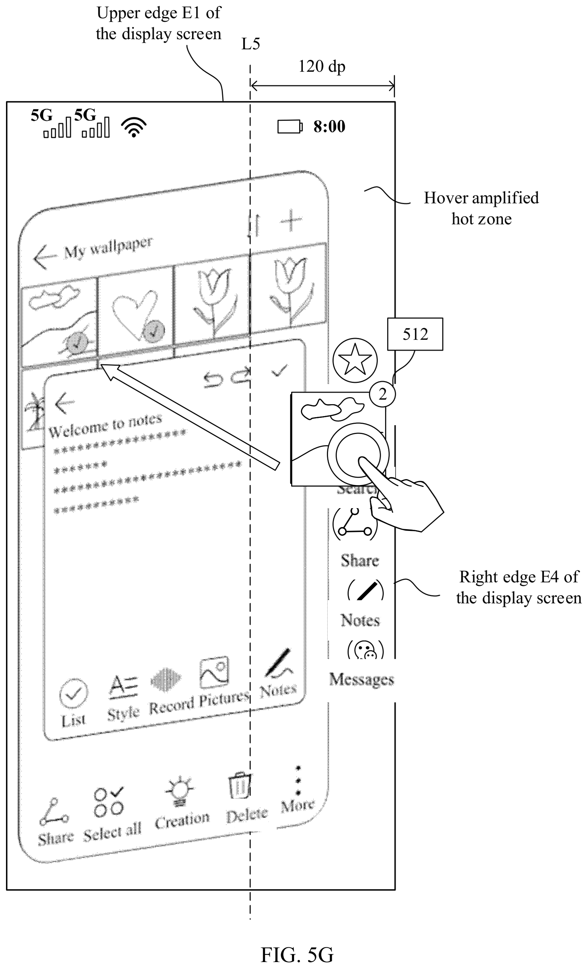

As shown in FIG. 5E-FIG. 5F, the electronic device may detect an operation of dragging the control 512 to the open-door hot zone on the right side, and the electronic device may enable the smart transfer service in response to the operation. Referring to FIG. 5G, in response to the control 512 being dragged to the open-door hot zone on the right side, the electronic device displays a menu bar including icons of a plurality of candidate applications on the right side of the display screen, and adjusts an original user interface to a perspective style. In some implementations, the electronic device may enable the smart transfer service after detecting that a touch point of a finger dragging the control 512 stays in the open-door hot zone on the right side for a period of time. As shown in FIG. 5G, the touch point of the finger of the user is further located in a hover amplified hot zone. Therefore, an icon of a candidate application in a menu bar also presents a proximity hover animation effect.

As shown in FIG. 5G-FIG. 5H, the electronic device may detect that the control 512 is continued to be dragged from the open-door hot zone on the right side to a partial region in the middle of the display screen, where the partial region is outside the hover amplified hot zone and the close-door hot zone, so that the electronic device 100 stops displaying the proximity hover animation effect. That is, referring to FIG. 1H, each icon in the menu bar 116 has a same size, which is the base size.

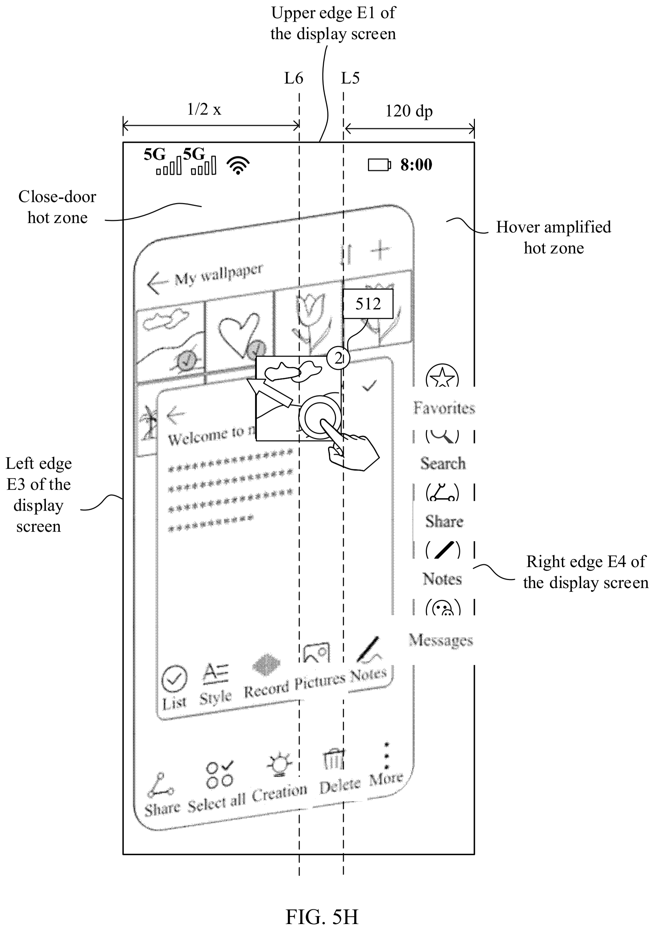

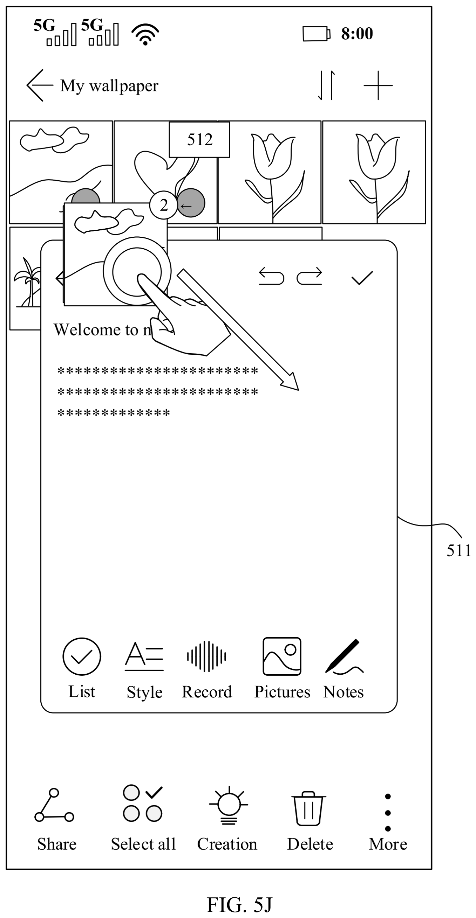

As shown in FIG. 5H-FIG. 5I, the electronic device may detect an operation of continuing to drag the control 512 to the close-door hot zone on the left side of the display screen. Referring to FIG. 5J, in response to this operation, the electronic device disables the smart transfer service, that is, does not display the menu bar, and does not present an open-door effect.

As shown in FIG. 5J-FIG. 5L, after detecting a user operation of continuing to drag the control 512 to the window 511 and releasing the control, the electronic device 100 may send an image corresponding to the control 512 to the notes application corresponding to the window 511. Then, the electronic device 100 may display, in the window 511, an image corresponding to the foregoing selected icon.

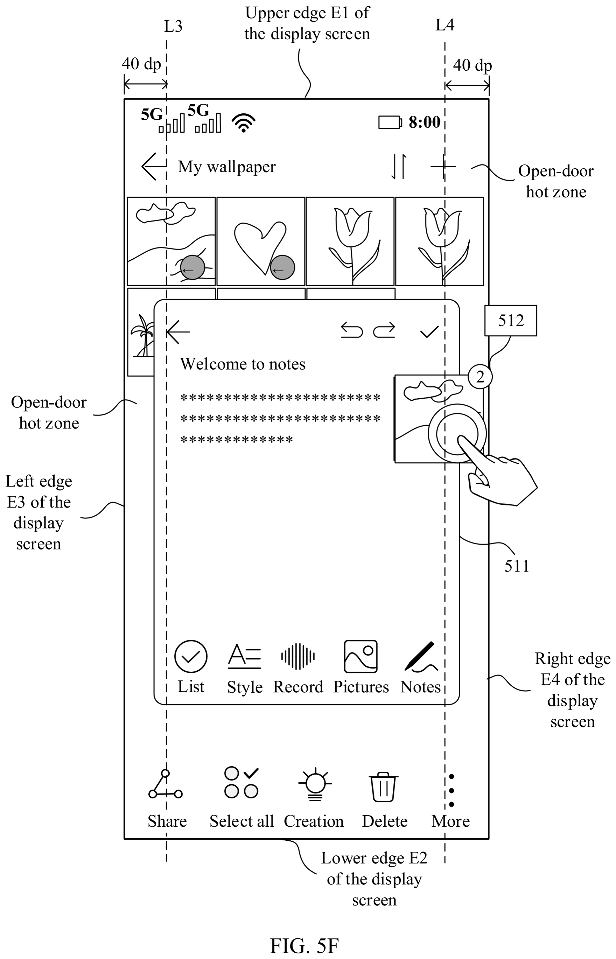

In the examples shown in FIG. 5C-FIG. 5L, the user can be provided with a quick and convenient manner of disabling the smart transfer service after the smart transfer service is enabled by the user by mistake, without interrupting a next operation of the user. Specifically, it is assumed that the original purpose of dragging the control 512 by the user in FIG. 5E is to drag the control 512 to the window 511, so as to send the image corresponding to the control 512 to the notes application. However, the user drags the control 512 to the open-door hot zone shown in FIG. 5F by mistake. Thereafter, the electronic device displays the "open door" effect shown in FIG. 5G. However, the "open door" effect shown in FIG. 5G is not a desired result of the user, so the user can continue to drag the control 512 to the close-door hot zone on the left side of the display screen to close the "open door" effect. Also, after closing the "open door" effect, the user may continue to drag the control 512 to the window 511 and releasing the control to complete data transmission to achieve the original purpose. In this process, although the user triggers the smart transfer service by mistake, the user may continue to drag the control 512 to disable the smart transfer service to achieve the original purpose. In this process, the user continues to drag the control 512, that is, the user can easily, conveniently, and quickly avoid a misoperation, so that the original purpose can be achieved without the finger leaving the display screen.

In embodiments of this application, the open-door hot zone may also be referred to as a second region, a region other than the open-door hot zone may be referred to as a first region, and the first region and the second region do not overlap.

For example, the second region may include the open-door hot zone 115A and the open-door hot zone 115B shown in FIG. 1G-FIG. 1H, and the first region may include regions of the display screen other than the open-door hot zone 115A and the open-door hot zone 115B in FIG. 1G-FIG. 1H.

For another example, the second region may include the open-door hot zone 412A and the open-door hot zone 412B shown in FIG. 4C-FIG. 4R, and the first region may include regions of the display screen other than the open-door hot zone 412A and the open-door hot zone 412B in FIG. 4C-FIG. 4R.

For another example, the second region may include the open-door hot zone on the left side and the open-door hot zone on the right side shown in FIG. 5F, and the first region may include regions of the display screen other than the open-door hot zone on the left side and the open-door hot zone on the right side in FIG. 5F.

In embodiments of this application, the glow strip guiding hot zone may also be referred to as a third region, and the third region includes the second region. For an example of the glow strip guiding hot zone, refer to the foregoing description of UI embodiments.

In embodiments of this application, the hover amplified hot zone may also be referred to as a fourth region, where the fourth region includes a second region on a side on which a menu bar is located, or includes a second region in which a touch end point of a first drag operation or a third drag operation is located. For an example of the hover amplified hot zone, refer to the foregoing UI embodiments. For the first drag operation and the third drag operation, refer to subsequent descriptions.

The second region on the side on which the menu bar is located, or the second region in which the touch end point of the first drag operation or the third drag operation is located refers to a part of the second region, for example, a region on a side. For example, the part of the second region may include the open-door hot zone 115B shown in FIG. 1G-FIG. 1H, the open-door hot zone 412B shown in FIG. 4C-FIG. 4F, the open-door hot zone 412A shown in FIG. 4H-FIG. 4R, and the open-door hot zone on the right side shown in FIG. 5G.

In embodiments of this application, a region outside the hover amplified hot zone and the close-door hot zone on the display screen may also be referred to as a fifth region. An example of the fifth region may include a region outside the hover amplified hot zone 117 and the close-door hot zone 118 in FIG. 1J, or a region area outside the hover amplified hot zone and the close-door hot zone in FIG. 5H.

In embodiments of this application, the close-door hot zone may also be referred to as a sixth region. For an example of the close-door hot zone, refer to the foregoing description of UI embodiments.

In embodiments of this application, a floating element may be referred to as a first element, and a user interface on which a floating element is displayed may be referred to as a first interface.

For example, an example of the first interface may include the interface shown in FIG. 1D, and an example of the first element may include the control 112 in a floating state in FIG. 1D.

For another example, an example of the first interface may include the interface shown in FIG. 4B-FIG. 4D, or FIG. 4G, or FIG. 4H-FIG. 4I, and an example of the first element may include the image 411 in FIG. 4B-FIG. 4D, or FIG. 4G, or FIG. 4H-FIG. 4I.

For another example, an example of the first interface may include the interface shown in FIG. 4N, and an example of the first element may include the control 413 in a floating state in FIG. 4N.

For another example, an example of the first interface may include the interface shown in FIG. 5E, and an example of the first element may include the control 512 in a floating state in FIG. 5E.

In embodiments of this application, data corresponding to a floating element may be referred to as first data.

For example, an example of the first data may include the selected text in FIG. 1C, the screenshot of the user interface shown in FIG. 4A, or the image corresponding to the selected icon in FIG. 5D.

An application that provides a first interface may be referred to as a sixth application, for example, the browser application shown in FIG. 1A and FIG. 4A, the notepad application shown in FIG. 4M, and the gallery application shown in FIG. 5C.

In embodiments of this application, before a floating element is displayed, a user interface used to generate the floating element may be referred to as a second interface.

For example, an example of the second interface may include the user interface shown in FIG. 1A-FIG. 1C. In the user interface in FIG. 1A-FIG. 1C, the text selected by the user may be referred to as a first text.

For another example, an example of the second interface may include the user interface shown in FIG. 4A.

For another example, an example of the second interface may include the user interface shown in FIG. 5C-FIG. 5D. In the user interface shown in FIG. 5C-FIG. 5D, the selected icon may be referred to as an icon of a first image, and the unselected icon may be referred to as an icon of a second image.

In embodiments of this application, there may be a plurality of drag operations on the first element.

A drag operation on the first element and used to trigger the smart transfer service or trigger the open-door effect may include the following two types:
1. A first drag operation, where a touch start point of the first drag operation is on the first element and is located in the first region of the display screen, and a touch end point thereof is located in the second region of the display screen.

For example, an example of the first drag operation may include the operation of dragging the control 112 from the open-door hot zone 115A and a region of the display screen other than the open-door hot zone 115B to the open-door hot zone 115B shown in FIG. 1D-FIG. 1G.

For another example, an example of the first drag operation may include the operation of dragging the image 411 from the open-door hot zone 412A and a region of the display screen other than the open-door hot zone 412B to the open-door hot zone 412B shown in FIG. 4D-FIG. 4E.

2. A third drag operation, where a touch start point of the third drag operation is on the first element and is located in the second region, a touch end point thereof is located in the second region, and a track of the third drag operation passes through the first region.

For example, an example of the third drag operation may include the operation of dragging the control 112 from the open-door hot zone 412A to a non-open-door region and then dragging he control to the open-door hot zone 412A shown in FIG. 4I-FIG. 4K.

For another example, an example of the third drag operation may include the operation of dragging the control 413 from the open-door hot zone 414A to a non-open-door region and then dragging he control to the open-door hot zone 414A shown in FIG. 4N-FIG. 4Q.

A drag operation on the first element and not used to trigger the smart transfer service or trigger the open-door effect may include a second drag operation. A touch start point of the second drag operation is on the first element and is located in the second region, a touch end point thereof is located in the second region of the display screen, and a track of the second drag operation is located in the second region.

For example, an example of the second drag operation may include the drag operation in the open-door hot zone 115A or the open-door hot zone 115B in FIG. 1D-FIG. 1G, or the drag operation in the open-door hot zone 412A or the open-door hot zone 412B in FIG. 4D-FIG. 4E, or the drag operation in the open-door hot zone 412A or the open-door hot zone 412B in FIG. 4I-FIG. 4K, or the drag operation in the open-door hot zone 414A or the open-door hot zone 414B in FIG. 4N-FIG. 4Q.

The touch start point and the touch end point of each of the first drag operation, the second drag operation, and the third drag operation represent only a start position and an end position of a corresponding drag operation. The touch start point does not necessarily indicate that the finger of the user touches the display screen at a start time point of the drag operation, and the touch end point does not indicate that the finger of the user leaves the display screen at an end time point of the drag operation. That is, before the first drag operation, the second drag operation, and the third drag operation, there may be another operation of continually and continuously touching the display screen, or certainly, there may be no another operation of continually and continuously touching the display screen. After the first drag operation, the second drag operation, and the third drag operation, there may be another operation of continually and continuously touching the display screen.

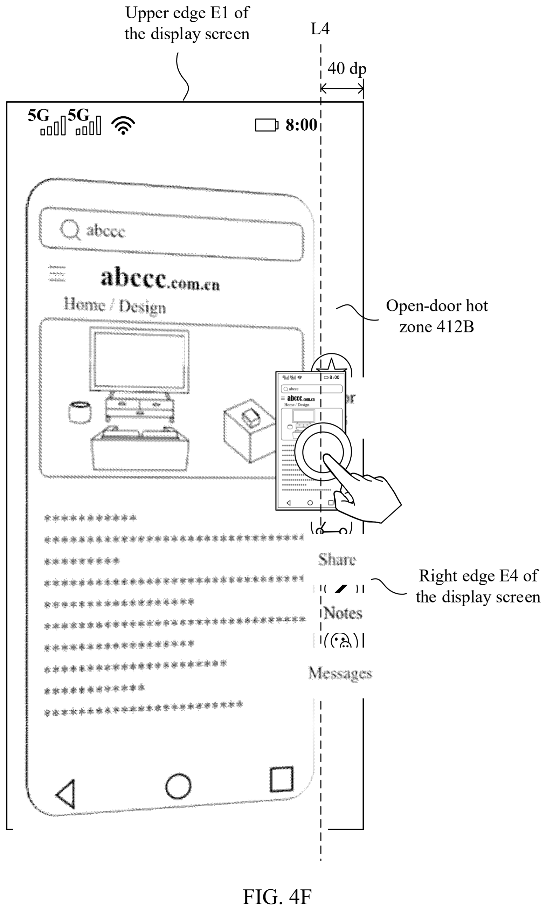

In embodiments of this application, a menu bar that includes icons of one or more candidate applications and that is displayed on the electronic device may be referred to as a first menu bar. An example of the first menu bar may include the menu bar 116 shown in FIG. 1H-FIG. 1K and FIG. 1M, and may also include the menu bar shown in FIG. 4F, FIG. 4L, FIG. 4R, and FIG. 5G-FIG. 5I.

In embodiments of this application, after displaying the first menu bar, the electronic device may further detect an operation of continuing to drag the first element to a region in which the icon of the candidate application in the first menu bar is located and releasing the first element. The candidate application may be referred to as a first application. An example of the first application may include the notes application in FIG. 1M.

In embodiments of this application, after displaying the first menu bar, the electronic device may further detect a fourth drag operation of continuing to drag the first element in the fourth region, where a touch start point of the fourth drag operation is the same as the touch end point of the first drag operation or the third drag operation, and a touch end point of the fourth drag operation is closest to an icon of the second application in the first menu bar. That is, the fourth drag operation and the first drag operation or the third drag operation are continuous and uninterrupted.

An example of the fourth drag operation may include the operation of dragging the control 112 shown in FIG. 1H-FIG. 1I.

When the first menu bar is displayed, in the proximity hover animation effect, an icon of a candidate application closest to the user touch point may be referred to as an icon of a second application, an icon of each adjacent application before and after the icon of the second application may be referred to as an icon of a first application and an icon of a third application, and an icon of another application may be referred to as an icon of a fourth application.

The favorites icon, the search icon, the share icon, and the notes icon in the menu bar 116 shown in FIG. 1I may be respective examples of the icon of the first application, the icon of the second application, the icon of the third application, and the icon of the fourth application.

In embodiments of this application, after detecting the fourth drag operation, the electronic device may further detect a fifth drag operation of continuing to drag the first element to a fifth region, where the fifth region and the fourth region do not overlap; and display each icon in the first menu bar as the base size in response to the fifth drag operation. For an example of the fifth drag operation, refer to the drag operation shown in FIG. 1I-FIG. 1J, or the drag operation shown in FIG. 5G-FIG. 5H.

A touch start point of the fifth drag operation is the same as the touch end point of the fourth drag operation. That is, the fifth drag operation and the fourth drag operation are continuous and uninterrupted.

In embodiments of this application, after displaying the first menu bar, the electronic device may further detect a sixth drag operation of dragging the first element to a sixth region, where the sixth region and the second region do not overlap, and the sixth region is located on an opposite side of the first menu bar on the display screen; and stop displaying the first menu bar in response to the sixth drag operation.

An example of the sixth drag operation may include the drag operation shown in FIG. 1H-FIG. 1K, or the drag operation shown in FIG. 5G-FIG. 5I.

In embodiments of this application, the electronic device may display a third interface for the foregoing described solution of reducing an open-door hot zone to prevent a false touch, where the third interface includes a second element; detect a drag operation on the second element; when the drag operation is a seventh drag operation, a touch start point of the seventh drag operation is on the second element and is located in a seventh region of the display screen, and a touch end point thereof is located in an eighth region of the display screen, display a second menu bar; when the drag operation is an eighth drag operation, a touch start point of the eighth drag operation is on the second element and is located in the eighth region, a touch end point thereof is located in the eighth region of the display screen, and a track of the eighth drag operation passes through the seventh region, display the second menu bar; and when the drag operation is not the seventh drag operation or the eighth drag operation, not display the second menu bar, where the eighth region is a part of the second region.

The eighth region is a reduced open-door hot zone, and the seventh region is a region of the display screen other than the reduced open-door hot zone.

For example, referring to FIG. 4G, the eighth region includes the open-door hot zone 412A and the open-door hot zone 412B, and the seventh region includes a region of the display screen other than the open-door hot zone 412A and the open-door hot zone 412B.

For another example, referring to FIG. 4N-FIG. 4R, the eighth region includes the open-door hot zone 412A and the open-door hot zone 412B, and the seventh region includes a region of the display screen other than the open-door hot zone 412A and the open-door hot zone 412B.

The following describes an electronic device provided in an embodiment of this application.

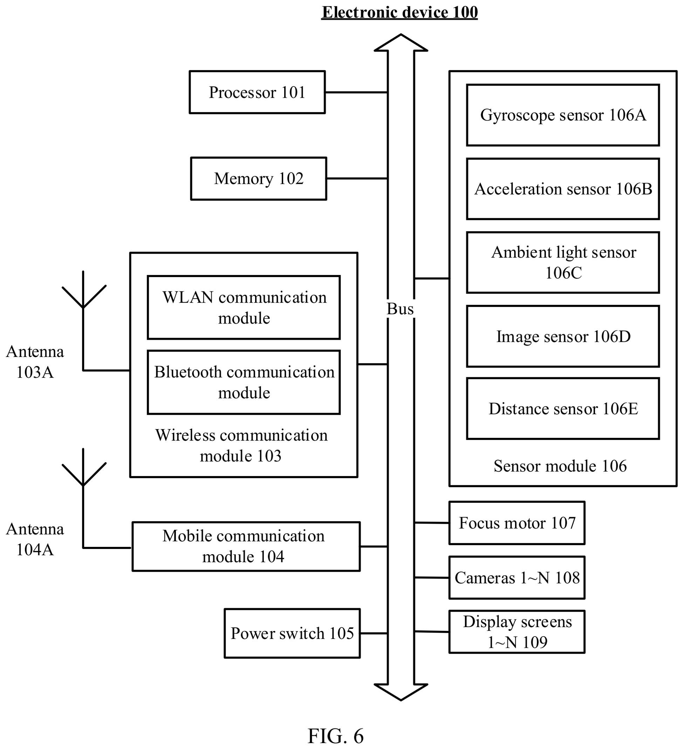

FIG. 6 is a schematic diagram of a hardware structure of an electronic device 100 according to an embodiment of this application. The electronic device 100 is configured to perform the data sharing method provided in the foregoing method embodiments.

The electronic device 100 may include a processor 101, a memory 102, a wireless communication module 103, a mobile communication module 104, an antenna 103A, an antenna 104A, a power switch 105, a sensor module 106, a focus motor 107, a camera 108, a display screen 109, and the like. The sensor module 106 may include a gyroscope sensor 106A, an acceleration sensor 106B, an ambient light sensor 106C, an image sensor 106D, a distance sensor 106E, and the like. The wireless communication module 103 may include a WLAN communication module, a Bluetooth communication module, and the like. The plurality of parts may transmit data by using a bus.

The processor 101 may include one or more processing units. For example, the processor 101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The memory 102 may be configured to store computer executable program code, and the executable program code may include instructions. The processor 101 runs the instructions stored in the memory 102, to perform various function applications and data processing of the electronic device 100. The memory 102 may include a program storage region and a data storage region. In specific implementation, the memory 902 may include a high-speed random access memory, and may also include a nonvolatile memory, for example, one or more magnetic disk storage devices, a flash memory device, or another nonvolatile solid-state storage device.

A wireless communication function of the electronic device 100 may be implemented by using the antenna 103A, the antenna 104A, the mobile communication module 104, the wireless communication module 103, the modem processor, the baseband processor, and the like.

The antenna 103A and the antenna 104A may be configured to transmit or receive an electromagnetic wave signal. Each antenna in the electronic device 100 may be configured to cover one or more communication frequency bands. Different antennas may be further multiplexed to improve antenna utilization.

The mobile communication module 104 may provide a solution for wireless communication including 2G/3G/4G/5G and the like applied to the electronic device 100.

The wireless communication module 103 may provide a solution for wireless communication that is applied to the electronic device 100 and that includes a wireless local area network (wireless local area networks, WLAN), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like.

The power switch 105 may be configured to control a power supply to supply power to the electronic device 100.

The electronic device 100 may implement a shooting function through the camera lens 108, the ISP, the video codec, the GPU, the display screen 109, the application processor, and the like.

The electronic device 100 may implement a display function by using a GPU, the display screen 109, an application processor, and the like. The GPU is a microprocessor for image processing and connects the display screen 109 and the application processor. The GPU is configured to perform mathematical and geometric computing for graphics rendering. The processor 101 may include one or more GPUs, and the one or more GPUs execute program instructions to generate or change display information.

The display screen 109 is configured to display an image and a video. The display screen 109 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N display screens 109, where N is a positive integer greater than 1.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The parts shown in the figure may be implemented by hardware, software, or a combination of software and hardware.

In this embodiment of this application, the display screen 109 is configured to display the user interfaces shown in FIG. 1A-FIG. 1N, FIG. 4A-FIG. 4M, and FIG. 5A-FIG. 5K. The display screen 109 may be further configured to receive an operation of a user acting on the display screen. The processor 101 is configured to determine a position of each hot zone in response to a user operation detected by the electronic device 100, and trigger a function corresponding to each hot zone in response to a user operation of the user acting on the hot zone. For an operation performed by each component in the electronic device 100, refer to related descriptions in the foregoing method embodiments. Details are not described herein again.

A software system of the electronic device 100 may use a layered architecture, an event-driven architecture, a microkernel architecture, a microservice architecture, or a cloud architecture. In this embodiment of this application, a mobile operating system with a layered architecture is used as an example to describe a software structure of the electronic device 100.

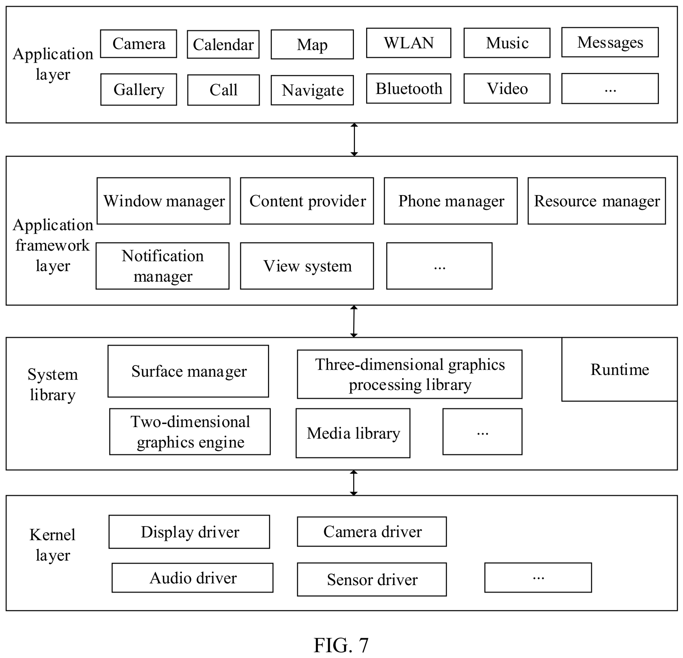

FIG. 7 is a block diagram of a software structure of an electronic device 100 according to an embodiment of this application.

In a layered architecture, software is divided into several layers, and each layer has a clear role and task. The layers communicate with each other through software interfaces. In some embodiments, the mobile operating system is divided into four layers: an application layer, an application framework layer/kernel service layer, a system library and runtime, and a kernel layer from top to bottom.

The application layer may include a series of application packages.

As shown in FIG. 7, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 7, the application framework layer may include a window manager, a content provider, a view system, a phone manager, a resource manager, a notification manager, and the like.

The window manager is configured to manage a window program. The window manager may obtain a size of a display, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The runtime may refer to all code bases, frames, and the like required when a program runs. For example, for C language, the runtime includes a library of functions required for a series of C programs to run. For Java language, in addition to the kernel library, the runtime includes a virtual machine or the like required for a Java program to run. The kernel library may include a function that needs to be invoked by Java language.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

It should be understood that the steps of the foregoing method embodiments may be completed by using a hardware integrated logic circuit in the processor or by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to cause the electronic device to perform the method performed on the electronic device side in any one of the foregoing embodiments.

This application further provides an electronic device, and the electronic device may include a memory and a processor. The memory may be configured to store a computer program, and the processor may be configured to invoke the computer program in the memory to cause the electronic device to perform the method performed on the electronic device side in any one of the foregoing embodiments.

This application further provides a chip system. The chip system includes at least one processor configured to implement the functions involved in the electronic device side in any one of the foregoing embodiments.

In a possible design, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product, and the computer program product includes a computer program (which may also be referred to as code or an instruction). When the computer program is run, a computer is caused to perform the method performed by the electronic device side in any one of the foregoing embodiments.

This application further provides a computer-readable storage medium. The computer-readable storage medium stores a computer program (also referred to as code or an instruction). When the computer program is run, a computer is caused to perform the method performed by the electronic device side in any one of the foregoing embodiments.

The various implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The available medium may be a magnetic medium (such as a floppy disk, a hard disk, or a magnetic tape), an optical medium (such as a DVD), a semiconductor medium (such as a solid state disk (solid state disk, SSD)), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of this application, and are not intended to limit the protection scope of this application. Any modification, equivalent replacement, and improvement made in accordance with the disclosure of this application shall be included in the protection scope of this application.

## Claims

1. A data sharing method, wherein the method comprises:
displaying a first interface, wherein the first interface comprises a first element;
detecting a drag operation on the first element;
when the drag operation is a first drag operation, a touch start point of the first drag operation is on the first element and is located in a first region of a display screen, and a touch end point is located in a second region of the display screen, displaying a first menu bar, wherein the first menu bar comprises an icon of a first application and an icon of a second application, and the first region and the second region do not overlap;
after an operation of continuing to drag the first element to a region in which the icon of the first application is located and releasing the first element is detected, sharing first data corresponding to the first element with the first application;
when the drag operation is a second drag operation, a touch start point of the second drag operation is on the first element and is located in the second region, a touch end point is located in the second region of the display screen, and a track of the second drag operation is located in the second region, not displaying the first menu bar; and
when the drag operation is a third drag operation, a touch start point of the third drag operation is on the first element and is located in the second region, a touch end point is located in the second region, and a track of the third drag operation passes through the first region, displaying the first menu bar.

2. The method according to claim 1, wherein
the first menu bar is displayed in response to the first drag operation when the drag operation is the first drag operation;
the first menu bar is not displayed in response to the second drag operation when the drag operation is the second drag operation; and
the first menu bar is displayed in response to the third drag operation when the drag operation is the third drag operation.

3. The method according to claim 1 or 2, wherein
when the drag operation is the first drag operation, the first menu bar is displayed after the touch end point of the first drag operation stays in the second region for first duration;
when the drag operation is the second drag operation, the first menu bar is not displayed after the touch end point of the second drag operation stays in the second region for the first duration; and
when the drag operation is the third drag operation, the first menu bar is displayed after the touch end point of the third drag operation stays in the second region for the first duration.

4. The method according to any one of claims 1-3, wherein the first drag operation and the operation of continuing to drag the first element to the region in which the icon of the first application is located and releasing the first element are continuous and uninterrupted.

5. The method according to any one of claims 1-4, wherein before the displaying a first interface, the method further comprises:
displaying a second interface, wherein the second interface comprises a text; and
detecting an operation of selecting a first text in the text, and displaying a toolbar on the first text, wherein the toolbar comprises a plurality of controls used to process the first text; and
the displaying a first interface comprises:
detecting a long press operation acting on the first text, stopping displaying the toolbar, and displaying the first interface;
wherein the first element comprises a preview image of the first text, and the first data comprises the first text.

6. The method according to any one of claims 1-4, wherein before the displaying a first interface, the method further comprises:
detecting a screenshot operation when a second interface is displayed; and
the displaying a first interface comprises:
displaying the first interface in response to the screenshot operation, wherein the first element comprises a preview image of a screenshot image of the second interface, and the first data comprises the screenshot image.

7. The method according to any one of claims 1-4, wherein before the displaying a first interface, the method further comprises:
displaying a second interface, wherein the second interface comprises an icon of a first image and an icon of a second image; and
detecting an operation of selecting the icon of the first image; and
the displaying a first interface comprises:
detecting a long press operation acting on the icon of the first image, and displaying the first interface;
wherein the first element comprises a preview image of the icon of the first image, and the first data comprises the first image.

8. The method according to any one of claims 1-7, wherein
the first menu bar and the second region in which the touch end point of the first drag operation or the third drag operation is located are on a same side of the display screen.

9. The method according to any one of claims 1-8, wherein the method further comprises:
when the drag operation is the first drag operation, or when the drag operation is the third drag operation, further adjusting the first interface to a perspective style of a first side when the first menu bar is displayed, wherein the first side is a side, on which the first menu bar is located, of the display screen.

10. The method according to any one of claims 1-8, wherein the first interface further comprises a video in playback, and the method further comprises:
when the drag operation is the first drag operation, or when the drag operation is the third drag operation, displaying, when the first menu bar is displayed, a screenshot image of the first interface, and displaying the screenshot image of the first interface to a perspective style of a first side, wherein the first side is a side, on which the first menu bar is located, of the display screen.

11. The method according to any one of claims 1-10, wherein the second region comprises: a rectangular region on a left side edge of the display screen and a rectangular region on a right side edge of the display screen, wherein a height of the rectangular region is the same as a height of the display screen.

12. The method according to any one of claims 1-11, wherein when the drag operation is the first drag operation, a track of the first drag operation passes through the third region, and the third region comprises the second region; and
the method further comprises:
displaying a glow strip in response to an operation of dragging the first element to the third region in the first drag operation, wherein the glow strip and the first menu bar are located on a same side of the display screen; and
the displaying a first menu bar comprises:
stopping displaying the glow strip and displaying the first menu bar in response to an operation of dragging the first element to the third region and then dragging the first element to the second region in the first drag operation.

13. The method according to claim 12, wherein the third region comprises: the rectangular region on the left side edge of the display screen and the rectangular region on the right side edge of the display screen, wherein a height of the third region is the same as the height of the display screen.

14. The method according to any one of claims 1-13, wherein the first menu bar further comprises an icon of a third application and an icon of a fourth application, and the icon of the first application, the icon of the second application, the icon of the third application, and the icon of the fourth application are arranged in sequence from top to bottom; and after the displaying a first menu bar, the method further comprises:
detecting a fourth drag operation of continuing to drag the first element in a fourth region, wherein the fourth region comprises the second region in which the touch end point of the first drag operation or the third drag operation is located, a touch start point of the fourth drag operation is the same as the touch end point of the first drag operation or the third drag operation, and a touch end point of the fourth drag operation is closest to the icon of the second application in the first menu bar; and
in response to the fourth drag operation, displaying the icon of the fourth application as a base size, displaying the icon of the second application as a size after the base size is magnified by a first proportion, and displaying the icon of the first application and the icon of the third application as a size after the base size is magnified by a second proportion, wherein the first proportion is greater than the second proportion.

15. The method according to claim 14, wherein
the fourth region comprises a rectangular region comprising the second region in which the touch end point of the first drag operation or the third drag operation is located, and a height of the fourth region is the same as the height of the display screen.

16. The method according to claim 14 or 15, wherein after the detecting a fourth drag operation of continuing to drag the first element to a fourth region, the method further comprises:
detecting a fifth drag operation of continuing to drag the first element to a fifth region, wherein the fifth region and the fourth region do not overlap; and
displaying each icon in the first menu bar as the base size in response to the fifth drag operation.

17. The method according to any one of claims 1-16, wherein when the drag operation is the first drag operation, or when the drag operation is the third drag operation, after the displaying a first menu bar, the method further comprises:
detecting a sixth drag operation of continuing to drag the first element to a sixth region, wherein the sixth region and the second region do not overlap, and the sixth region is located on an opposite side of the first menu bar on the display screen; and
stopping displaying the first menu bar in response to the sixth drag operation.

18. The method according to any one of claims 1-17, wherein the method further comprises:
displaying a third interface, wherein the third interface comprises a second element;
detecting a drag operation on the second element;
when the drag operation is a seventh drag operation, a touch start point of the seventh drag operation is on the second element and is located in a seventh region of the display screen, and a touch end point is located in an eighth region of the display screen, displaying a second menu bar, wherein the seventh region and the eighth region do not overlap;
when the drag operation is an eighth drag operation, a touch start point of the eighth drag operation is on the second element and is located in the eighth region, a touch end point is located in the eighth region of the display screen, and a track of the eighth drag operation passes through the seventh region, displaying the second menu bar; and
when the drag operation is not the seventh drag operation or the eighth drag operation, not displaying the second menu bar;
wherein the eighth region is a part of the second region.

19. The method according to claim 18, wherein
the eighth region comprises the rectangular region on the left side edge of the display screen and the rectangular region on the right side edge of the display screen; and a height of the eighth region is the same as a height of the second region, and a width of the eighth region is half of a width of the second region.

20. The method according to claim 18 or 19, wherein the third interface is provided by a fifth application, and the fifth application comprises a word editing-type application.

21. The method according to any one of claims 1 to 20, wherein
the second region when the display screen is in a landscape state is different from the second region when the display screen is in a portrait state.

22. The method according to any one of claims 1-21, wherein
the first interface is provided by a sixth application, and the sixth application is different from the first application.

23. An electronic device, comprising one or more processors and one or more memories, wherein the one or more memories are coupled to the one or more processors, the one or more memories are configured to store computer program code, the computer program code comprises computer instructions, and when executing the computer instructions, the one or more processors are enabled to perform the method according to any one of claims 1-22.

24. A computer-readable storage medium, comprising instructions, wherein when the instructions are run on an electronic device, the method according to any one of claims 1-22 is performed.
